(19) Europäisches Patentamt
European Patent Office
Office européen des brevets

(11) **EP 4 564 379 A1**

(12) **EUROPEAN PATENT APPLICATION**
published in accordance with Art. 153(4) EPC

(43) Date of publication:
04.06.2025 Bulletin 2025/23

(21) Application number: 23846688.2

(22) Date of filing: 28.07.2023

(51) International Patent Classification (IPC):
*H01F 1/16* (2006.01)    *H01F 1/153* (2006.01)
*H01F 3/04* (2006.01)    *H01F 27/25* (2006.01)

(52) Cooperative Patent Classification (CPC):
H01F 1/153; H01F 1/16; H01F 3/04; H01F 27/25

(86) International application number:
PCT/JP2023/027814

(87) International publication number:
WO 2024/024958 (01.02.2024 Gazette 2024/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.07.2022 JP 2022121759

(71) Applicant: Proterial, Ltd.
Tokyo 135-0061 (JP)

(72) Inventors:
• KURIYAMA, Yasuo
  Tokyo 135-0061 (JP)
• MIYANO, Kouhei
  Tokyo 135-0061 (JP)
• OGAWA, Yuichi
  Tokyo 135-0061 (JP)

(74) Representative: Barker Brettell LLP
100 Hagley Road
Edgbaston
Birmingham B16 8QQ (GB)

(54) **SHEET-SHAPED MAGNETIC MEMBER**

(57) There is provided a sheet-shaped magnetic member that easily suppresses deterioration of magnetic shielding characteristics for a circling coil. The sheet-shaped magnetic member of the present disclosure includes a plurality of magnetic sheet pieces each formed in an elongated shape and having anisotropy in which magnetic characteristics in a longitudinal direction and magnetic characteristics in a width direction intersecting with the longitudinal direction are different, in which the plurality of magnetic sheet pieces are radially arranged.

FIG. 1

EP 4 564 379 A1

**Description**

CROSS-REFERENCE TO RELATED APPLICATION

The present international application claims priority based on Japanese Patent Application No. 2022-121759 filed on July 29, 2022, the entire contents of which are incorporated herein by reference.

TECHNICAL FIELD

The present disclosure relates to a sheet-shaped magnetic member used for a magnetic core, an inductor, a magnetic shield, and the like.

BACKGROUND ART

A non-contact charging method is widely used as a charging method. The non-contact charging method is in widespread use in, for example, electronic devices such as a tablet-type information terminal, a music player, a smartphone, and a mobile phone. The non-contact charging technology is a technology also applicable to electronic devices other than the above, electric vehicles, drones, and the like. In addition, it is a technology also applicable to transport vehicles such as a forklift and an automated guided vehicle (AGV), a railway, a tram, and the like.

As a method for producing a sheet-shaped magnetic member used for the non-contact charging method, a method for producing a sheet-shaped magnetic member used for an inductor, a magnetic shield, or the like is known (see, for example, Patent Document 1). The production method described in Patent Document 1 includes: a step of bonding a thin sheet-shaped magnetic body onto a sheet substrate with an adhesive layer interposed therebetween to form a sheet-shaped magnetic member; and a step of dividing the thin sheet-shaped magnetic body into a plurality of pieces by an external force while maintaining a state of being bonded to the sheet substrate.

In addition, a combination of an amorphous alloy ribbon and a nanocrystalline alloy ribbon is known (see, for example, Patent Document 2). Patent Document 2 discloses laminating nanocrystalline ribbons. Specifically, a structure in which nanocrystalline ribbons are arranged one by one and laminated is disclosed. The nanocrystalline ribbons are arranged in the lateral direction, which corresponds to a width, and are also laminated in the vertical direction. It is disclosed that when nanocrystalline ribbons are laminated, the nanocrystalline ribbons are laminated with their longitudinal directions oriented in different directions. It is disclosed that such lamination has an effect of enhancing structural rigidity.

PRIOR ART DOCUMENTS

PATENT DOCUMENTS

Patent Document 1: JP 2008-112830 A
Patent Document 2: JP 2019-522355 A

SUMMARY OF THE INVENTION

PROBLEMS TO BE SOLVED BY THE INVENTION

As a sheet-shaped magnetic member used for non-contact charging, a sheet-shaped magnetic member with higher performance is required.

For example, in a non-contact charging circuit for an automobile, a large current may flow through a primary coil and a secondary coil. In the non-contact charging circuit for an automobile, a sheet-shaped magnetic member that exhibits a high shielding effect is required so as to cope with flowing of a large current. In addition, in the case of the non-contact charging circuit for an automobile, a sheet-shaped magnetic member having a large width is desired.

As such a sheet-shaped magnetic member, a sheet-shaped magnetic member using a nanocrystalline alloy ribbon is preferable. The nanocrystalline alloy ribbon has excellent magnetic characteristics as compared with other materials used for the magnetic sheet, and can be thinned.

On the other hand, the nanocrystalline alloy ribbon has a problem that it is difficult to form the nanocrystalline alloy ribbon into a wide shape. To solve this problem, nanocrystalline alloy ribbons may be arranged to form a sheet-shaped magnetic member having a large width. For example, elongated nanocrystalline alloy ribbons may be arranged in the width direction to form a wide sheet-shaped magnetic member.

In the nanocrystalline alloy ribbon formed in a belt shape, the magnetic characteristics in the longitudinal direction and the magnetic characteristics in the width direction orthogonal to the longitudinal direction may be different depending on the production method. For example, the magnetic characteristics in the longitudinal direction may be superior to the magnetic characteristics in the width direction, or conversely, the magnetic characteristics in the width direction may be superior to the magnetic characteristics in the longitudinal direction. In other words, the nanocrystalline alloy ribbon may have anisotropy depending on the production method.

In a primary coil and a secondary coil, the higher the Q1 value represented by the following equation (1), the lower the loss and the better the coil characteristics. The charging efficiency of the non-contact charging can be increased by increasing the Q1 value.

$$Q1 = 2\pi f Ls/Rs \ldots (1)$$

Here, f represents a frequency, Ls represents an inductance of the coil, and Rs represents a resistance of the coil.

A characteristic required of the sheet-shaped magnetic member for improving the coil characteristics is that a Q2 value is high. The Q2 value is a ratio ($\mu'/\mu''$) of a real part ($\mu'$) to an imaginary part ($\mu''$) of complex permeability.

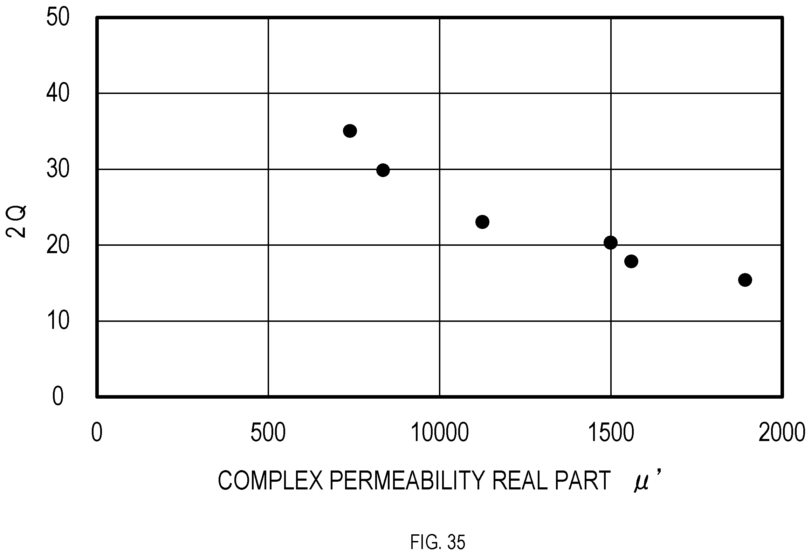

FIG. 35 shows a correlation between the real part ($\mu'$) of the complex permeability and the Q2 value. In FIG. 35, a ring-shaped core having an inner diameter of 8.6 mm and an outer diameter of 19.9 mm is punched out from a sheet-shaped magnetic member, and measurement is performed with a BH analyzer SY-8218 manufactured by IWATSU ELECTRIC CO., LTD. under conditions of a frequency f of 85 kHz and a voltage V of 30 mV. As shown in FIG. 35, the smaller the real part ($\mu'$) of the complex permeability, the higher the Q2 value tends to be.

In a state of the sheet-shaped magnetic member, the Q2 value in the longitudinal direction and the Q2 value in the width direction cannot be measured. That is, anisotropy of the sheet-shaped magnetic member cannot be measured. Further, arrangement of the sheet-shaped magnetic members cannot be determined based on the anisotropy.

The relative permeability ($\mu r$) of a direct current has a good correlation with the real part ($\mu'$) of the complex permeability. Thus, a direct-current relative permeability ($\mu r$) is measured, and a direction in which the direct-current relative permeability ($\mu r$) is low can be regarded as a direction in which the Q2 value is high. The anisotropy of the sheet-shaped magnetic member and the arrangement of the sheet-shaped magnetic members can be determined using the direction thus obtained in which the Q2 value is high.

When a sheet-shaped magnetic member is prepared using a nanocrystalline alloy ribbon having such anisotropy, the characteristics of the sheet-shaped magnetic member may not be stable due to the anisotropy of the nanocrystalline alloy ribbon when the sheet-shaped magnetic member is used for a non-contact charging circuit.

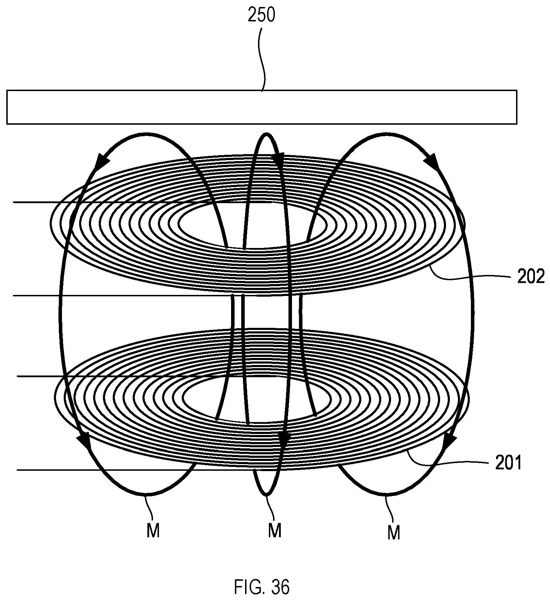

FIG. 36 is a schematic diagram illustrating an arrangement relationship among a sheet-shaped magnetic member 250, a primary coil 201, and a secondary coil 202.

The sheet-shaped magnetic member 250 is disposed adjacently to at least one of the primary coil 201 and the secondary coil 202 included in a non-contact charging circuit. FIG. 36 illustrates a state in which the sheet-shaped magnetic member 250 is disposed adjacently to the secondary coil 202. The primary coil 201 is a coil disposed on the primary side of the non-contact charging circuit, and the secondary coil 202 is a coil disposed on the secondary side. When it is not necessary to specify the primary side and the secondary side, they are each also simply referred to as a coil. The coil is formed by spirally winding a conductive wire through which a current flows, and has a circling plate shape having a through hole at the center.

A current flows through the primary coil 201, and a magnetic flux M is generated by the flowing current. The magnetic flux M generated by the primary coil 201 flows toward the secondary coil 202 along the normal direction of the plate shape at the center of the primary coil 201, for example. The magnetic flux flowing toward the secondary coil 202 flows from the inner periphery to the outer periphery of the coil. The magnetic flux M that has flowed to the outer periphery flows in a direction returning to the primary coil 201 on the outer peripheral side of the coil. The magnetic flux M that has returned to the primary coil 201 side flows from the outer peripheral side toward the inner peripheral side.

The magnetic flux that has flowed toward the secondary coil 202 passes through the secondary coil 202. When the magnetic flux passing through the secondary coil 202 changes, a voltage is induced in the secondary coil 202 depending on the change in the magnetic flux. The induced voltage causes a current to flow through the secondary coil 202.

When the sheet-shaped magnetic member has a configuration in which nanocrystalline alloy ribbons having anisotropy are arranged in the width direction as described above, the nanocrystalline alloy ribbons are arranged in a state in which the anisotropy is aligned in one direction. When a magnetic flux flows through the coil adjacent to the sheet-shaped magnetic member, in a part of the coil, the magnetic flux flows in a direction coinciding with the anisotropy, that is, in a direction in which the Q2 value is high. In another part of the coil, the magnetic flux flows in a direction not coinciding with the anisotropy, that is, in a direction in which the Q2 value is low.

When the magnetic flux flows in a direction coinciding with the anisotropy, the sheet-shaped magnetic member easily exhibits a magnetic shielding property and greatly improves the Q1 value of the coil. On the other hand, when the magnetic flux flows in a direction not coinciding with the anisotropy, it becomes difficult to exhibit the magnetic shielding property, making the improvement of the Q1 value of the coil small.

That is, when a sheet-shaped magnetic member in which nanocrystalline alloy ribbons having anisotropy are arranged in the width direction is used for a coil formed in a circling shape, there is a problem that characteristics as a magnetic shield are difficult to be stabilized and the characteristics are likely to be deteriorated.

In one aspect of the present disclosure, it is preferable to provide a sheet-shaped magnetic member that easily suppresses deterioration of magnetic shielding characteristics for a circling coil.

MEANS FOR SOLVING THE PROBLEMS

A sheet-shaped magnetic member of the present disclosure includes a plurality of magnetic sheet pieces formed in an elongated shape and having anisotropy in which magnetic characteristics in a longitudinal direction and magnetic characteristics in a width direction intersecting with the longitudinal direction are different, in which the plurality of magnetic sheet pieces are radially arranged.

According to the sheet-shaped magnetic member of the present disclosure, it is easy to make the direction of a magnetic flux of the sheet-shaped magnetic member generated by a current flowing through a circling coil used in combination coincide with the sheet-shaped magnetic member with the direction of the anisotropy of the sheet-shaped magnetic member. Specifically, the direction of anisotropy in the magnetic sheet piece, in other words, the direction in which the direct-current relative permeability $\mu_r$ is low, that is, the direction in which the magnetic characteristics are good, such as the direction in which the Q2 value is high, and the direction of the magnetic flux of the sheet-shaped magnetic member generated by the current flowing through the circling coil are easily made to coincide with each other.

EFFECTS OF THE INVENTION

According to the sheet-shaped magnetic member of the present disclosure, when the magnetic sheet pieces are arranged in such a manner that the direction of anisotropy is radial, the direction of the magnetic flux flowing through the circling coil is easily made to coincide with the anisotropy of the sheet-shaped magnetic member, and an effect of easily suppressing the deterioration of the magnetic shielding characteristics for the circling coil is obtained. Further, the sheet-shaped magnetic member of the present disclosure exhibits an effect of improving the characteristics of the coils to be combined.

BRIEF DESCRIPTION OF THE DRAWINGS

FIG. 1 is a plan view illustrating a configuration of a magnetic sheet in the present disclosure.
FIG. 2A is a view illustrating a shape and an arrangement of magnetic sheet pieces.
FIG. 2B is a view illustrating another arrangement of the magnetic sheet pieces.
FIG. 3A is a view illustrating a state before a strip-shaped magnetic sheet piece is cut into a triangular shape.
FIG. 3B is a view illustrating a state after the strip-shaped magnetic sheet piece is cut into a triangular shape.
FIG. 4 is a partial side view illustrating a laminated structure of a magnetic sheet piece.
FIG. 5 is a view illustrating a casting direction in magnetic sheet pieces arranged radially.
FIG. 6 is a graph showing a correlation between a maximum deviation angle and a Q2 value.
FIG. 7A is a view illustrating a state before a strip-shaped magnetic sheet piece is cut into a triangular shape with a cutout.
FIG. 7B is a view illustrating a state after the strip-shaped magnetic sheet piece is cut into the triangular shape with the cutout.
FIG. 7C is a view illustrating a state in which two magnetic sheet pieces each having the triangular shape with the cutout are arranged radially.
FIG. 8A is a view illustrating a state before a strip-shaped magnetic sheet piece is cut into a triangular shape with a cutout.
FIG. 8B is a view illustrating a state after the strip-shaped magnetic sheet piece is cut into the triangular shape with the cutout.
FIG. 8C is a view illustrating a state in which two magnetic sheet pieces each having the triangular shape with the cutout are arranged radially.
FIG. 9A is a view illustrating a state before a strip-shaped magnetic sheet piece is cut into two types of triangular shapes.

EP 4 564 379 A1

FIG. 9B is a view illustrating a state after the strip-shaped magnetic sheet piece is cut into the two types of triangular shapes.

FIG. 9C is a view illustrating a state in which the two types of triangular magnetic sheet pieces are arranged radially.

FIG. 10A is a view illustrating a state before a plurality of strip-shaped magnetic sheet pieces are cut into a fan shape.

FIG. 10B is a view illustrating the strip-shaped magnetic sheet pieces after being cut into the fan shape.

FIG. 11 is a plan view illustrating a configuration of a magnetic sheet having a circular shape.

FIG. 12 is a plan view illustrating a shape of a magnetic sheet piece constituting the magnetic sheet in FIG. 11.

FIG. 13 is a plan view illustrating another configuration of a magnetic sheet.

FIG. 14 is a plan view illustrating a shape of a strip-shaped magnetic sheet piece constituting the magnetic sheet in FIG. 13.

FIG. 15 is a partially enlarged view illustrating a configuration of a magnetic sheet in which magnetic sheet pieces are laminated in multiple layers.

FIG. 16 is a view illustrating a method for forming a magnetic sheet piece having an equilateral triangular shape and a magnetic sheet piece having a right triangular shape from a plurality of strip-shaped magnetic sheet pieces.

FIG. 17 is a plan view illustrating a configuration of a magnetic sheet having an octagonal shape.

FIG. 18 is a view illustrating a state in which magnetic sheet pieces for covering are disposed on the magnetic sheet in FIG. 17.

FIG. 19 is a schematic view illustrating a method for producing a strip-shaped magnetic sheet piece.

FIG. 20 is a cross-sectional view illustrating a configuration of a laminate supplied from a first unwinding roll.

FIG. 21 is a cross-sectional view illustrating a configuration of a laminate supplied from the first unwinding roll, from which a resin sheet has been peeled off.

FIG. 22 is a cross-sectional view illustrating a configuration of a magnetic ribbon supplied from a second unwinding roll.

FIG. 23 is a cross-sectional view illustrating a state in which a magnetic ribbon is bonded to an adhesive layer by an attaching roll.

FIG. 24 is a cross-sectional view illustrating a state in which cracks are formed in a magnetic ribbon by a crack roll.

FIG. 25 is a schematic view illustrating a method for producing a strip-shaped magnetic sheet piece.

FIG. 26 is a view illustrating a configuration of a magnetic sheet according to Example 1.

FIG. 27 is a view illustrating a configuration of a magnetic sheet according to Example 2.

FIG. 28 is a view illustrating a configuration of a magnetic sheet according to Example 3.

FIG. 29 is a view illustrating a configuration of a magnetic sheet according to Example 4.

FIG. 30 is a view illustrating a configuration of a magnetic sheet according to Comparative Example 1.

FIG. 31 is a view illustrating a measuring apparatus used for evaluating a magnetic sheet.

FIG. 32 is a graph showing a value of Q1 calculated on the basis of a measurement result.

FIG. 33 is a graph showing a measured value of Ls.

FIG. 34 is a graph showing a measured value of Rs.

FIG. 35 is a graph showing a correlation between a real part ($\mu'$) of a complex permeability and a Q2 value.

FIG. 36 illustrates a state in which a sheet-shaped magnetic member is disposed adjacently to a coil.

EXPLANATION OF REFERENCE NUMERALS

10 ... adhesive layer, 20 ... magnetic ribbon, 110 ... magnetic sheet (sheet-shaped magnetic member), 120T, 120S ... magnetic sheet piece, 151 ... first adjacent position, 152 ... second adjacent position

MODE FOR CARRYING OUT THE INVENTION

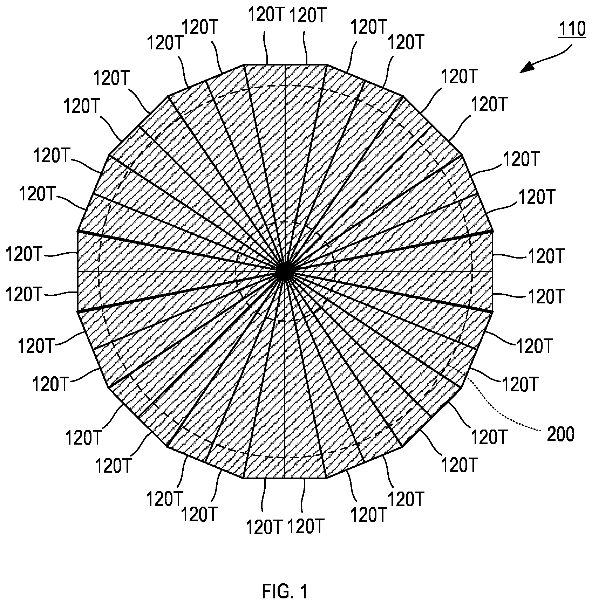

A magnetic sheet 110 (corresponding to an example of a sheet-shaped magnetic member) according to an embodiment of the present disclosure will be described with reference to FIGS. 1 to 34. The magnetic sheet 110 is used for a non-contact type charging apparatus. The magnetic sheet 110 may be used for a power feeding device or a power receiving device of the charging apparatus.

In the present embodiment, an example in which the magnetic sheet 110 is used for non-contact charging of an apparatus having higher power consumption than that of an information processing device and/or an electronic device (e.g., a smartphone and the like) will be described. Specifically, an example in which the magnetic sheet 110 is used for non-contact charging of a moving body such as an automobile will be described. The magnetic sheet 110 is also applicable to transport vehicles such as a forklift and an AGV, a railway, a tram, and the like.

FIG. 1 is a plan view illustrating a configuration of the magnetic sheet 110.

As illustrated in FIG. 1, the magnetic sheet 110 is a plate-shaped member. The magnetic sheet 110 is disposed adjacently to a coil 200 used for non-contact charging in a direction orthogonal to the paper surface in FIG. 1. The magnetic sheet 110 is preferably used in combination with the coil 200.

The coil 200 is a member in which a conductive wire through which a current flows is spirally wound, and the coil 200 has a circular shape having a through hole in which a conductive wire is not disposed at the center thereof. In FIG. 1, only the shape of the coil 200 is indicated by a dotted line to facilitate understanding of the magnetic sheet 110. Although the coil 200 has a circular shape, the magnetic sheet 110 may be used in combination with a coil having a shape other than the circular shape, such as a rectangular coil.

The coil 200 may be a coil on a primary side or a coil on a secondary side in non-contact charging. In the present embodiment, an example in which the coil 200 is a coil on the secondary side will be described.

The magnetic sheet 110 has a configuration in which a plurality of magnetic sheet pieces 120T are radially arranged. FIG. 1 illustrates the magnetic sheet 110 in which 32 magnetic sheet pieces 120T are radially arranged. The number of magnetic sheet pieces 120T included in the magnetic sheet 110 may be less than 32 or more than 32.

The coil 200 having a circular shape is disposed so as to share the center with the magnetic sheet 110. Specifically, the radial center of the magnetic sheet 110 and the center of the coil 200 having a circular shape are shared. The term "share" as used herein includes not only a case where two centers coincide with each other but also a case where two centers fall within a predetermined range.

For example, the predetermined range may be any range as long as the center of the magnetic sheet 110 falls inside the inner diameter of the coil 200.

Further, the predetermined range may be any range as long as the range is within a range of a shorter one of the length of 20% or less of the outer diameter of the coil 200 or the length of 5% of a half of the difference between the outer diameter of the magnetic sheet 110 and the outer diameter of the coil 200.

In FIG. 1, a central portion of the magnetic sheet 110 is likely to have a configuration in which a plurality of magnetic sheet pieces 120T overlap in a multiple manner. Thus, the central portion may swell or workability may deteriorate. To improve this, the central portion of the magnetic sheet 110 may be a hole. In this case, the size of the hole is smaller than the inner diameter of the coil 200.

Note that the hole may be formed after the magnetic sheet 110 is formed, or a portion to be a hole may be provided in a magnetic sheet 120T in advance.

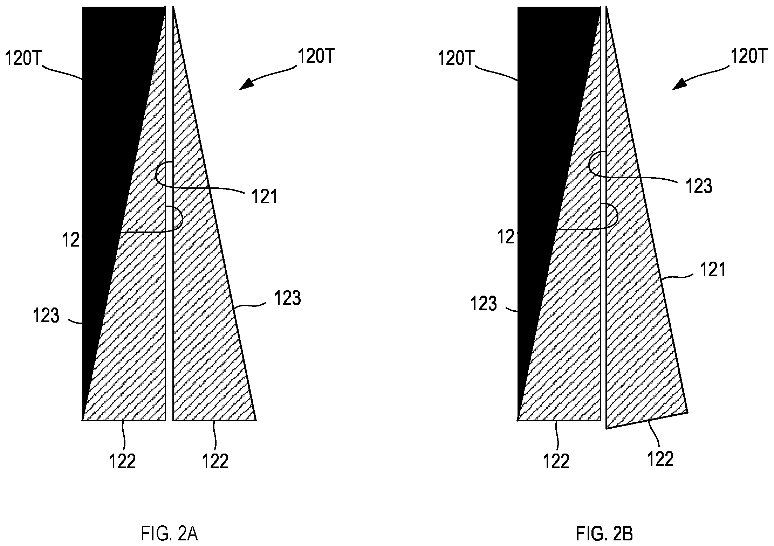

FIG. 2A is a view illustrating an example of a shape and an arrangement of the magnetic sheet pieces 120T constituting the magnetic sheet 110 in FIG. 1, and FIG. 2B is a view illustrating another arrangement of the magnetic sheet pieces 120T.

As illustrated in FIG. 2A, the magnetic sheet pieces 120T each have a triangular shape having a long side 121, a short side 122, and an oblique side 123. In other words, the magnetic sheet pieces 120T each have a shape in which a width dimension increases from one end side which is a corner side constituted by the long side 121 and the oblique side 123 toward the other end side which is a short side 122 side. In the present embodiment, an example in which the magnetic sheet pieces 120T each have a right triangle shape will be described. Note that the magnetic sheet pieces 120T each may have a triangular shape other than a right triangle.

In the magnetic sheet 110, sets of two magnetic sheet pieces 120T whose long sides 121 are adjacent to each other are radially arranged. In other words, the two magnetic sheet pieces 120T are set as a set having an isosceles triangle shape, and the sets are radially arranged. FIG. 1 illustrates the magnetic sheet 110 including 16 sets of magnetic sheet pieces 120T.

When the two magnetic sheet pieces 120T are arranged in such a manner that the long sides 121 are adjacent to each other, and when sets of the two magnetic sheet pieces 120T are radially arranged, the magnetic sheet pieces 120T may be arranged so as to overlap each other, the magnetic sheet pieces 120T may be arranged so as to abut on each other, or the magnetic sheet pieces 120T may be arranged with an interval therebetween. In the present embodiment, the magnetic sheet pieces 120T are arranged to abut on each other.

Note that the set of the magnetic sheet pieces 120T may be a set in which the long sides 121 are adjacent to each other as illustrated in FIG. 2A, or a set in which the long side 121 and the oblique side 123 are adjacent to each other as illustrated in FIG. 2B.

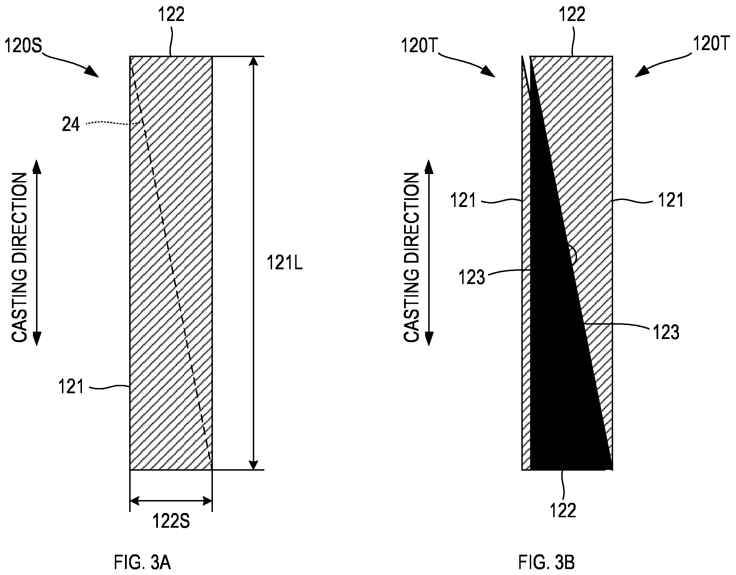

FIGS. 3A and 3B are views illustrating a method for forming the magnetic sheet piece 120T from a strip shape into a triangular shape.

The triangular magnetic sheet piece 120T is formed from a strip-shaped magnetic sheet piece 120S having a long side 121 and a short side 122 as illustrated in FIG. 3A. In the present embodiment, an example in which a length 121L of the long side 121 is 150 mm and a length 122S of the short side 122 is 30 mm will be described. Note that the length 121L may be longer or shorter than 150 mm. The length 122S may be longer or shorter than 30 mm.

The triangular magnetic sheet piece 120T is formed by performing cutting along a cutting line 24 which is a diagonal line connecting two diagonal corners of the strip-shaped magnetic sheet piece 120S. Two triangular magnetic sheet pieces 120T are formed from one strip-shaped magnetic sheet piece 120S. The length 121L of the long side 121 and the length 122S of the short side 122 in the formed triangular magnetic sheet piece 120T have the same values as the length 121L of the long side 121 and the length 122S of the short side 122 in the strip-shaped magnetic sheet piece 120S.

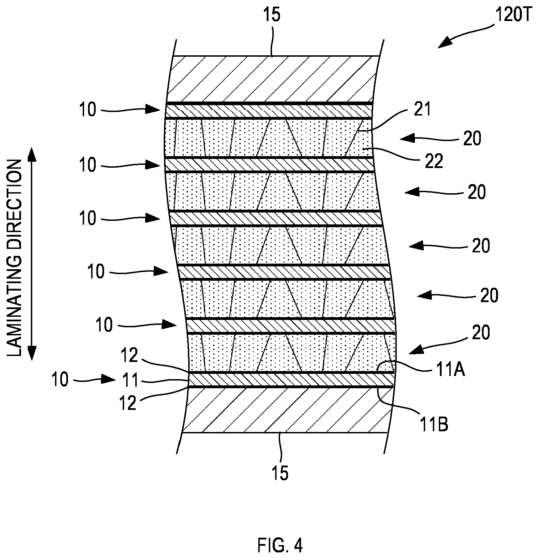

FIG. 4 is a partial side view illustrating a laminated structure of the magnetic sheet piece 120T.

The magnetic sheet piece 120T has a multilayer structure in which a plurality of adhesive layers 10 and a plurality of magnetic ribbons 20 are alternately laminated. In the present embodiment, as illustrated in FIG. 4, there will be described an example in which the magnetic sheet piece 120T has a multilayer structure in which six adhesive layers 10 and five magnetic ribbons 20 are alternately laminated.

Specifically, the magnetic sheet piece 120T has a multilayer structure in which an adhesive layer 10, a magnetic ribbon 20, an adhesive layer 10, a magnetic ribbon 20, an adhesive layer 10, a magnetic ribbon 20, an adhesive layer 10, a magnetic ribbon 20, an adhesive layer 10, a magnetic ribbon 20, and an adhesive layer 10 are laminated in this order.

Note that the number of magnetic ribbons 20 included in the magnetic sheet piece 120T may be five layers as described above, or may be any number of two or more layers excluding five layers. The number of magnetic ribbons 20 is preferably 3 or more, and preferably 4 or more. The number of magnetic ribbons 20 may be 20 or more, but is preferably 20 or less. Note that the number of magnetic ribbons 20 is more preferably 15 or less, and more preferably 10 or less.

The magnetic sheet pieces 120T can be further laminated to form the magnetic sheet 110. At this time, the number of the magnetic ribbons 20 in the magnetic sheet 110 is larger than that of the magnetic sheet piece 120T. For example, the number of laminated magnetic ribbons in the magnetic sheet 110 is 30 to 200. The number of magnetic ribbons may be less than 30 or more than 200.

In addition, when the magnetic sheet pieces 120T are stacked, it is preferable that the magnetic sheet pieces 120T are shifted and stacked as viewed in the laminating direction, and magnetic gaps between the magnetic sheet pieces 120T are not continuous in the laminating direction.

The magnetic sheet piece 120T may be further provided with two resin sheets 15. The two resin sheets 15 are bonded to two outermost adhesive layers 10 in the magnetic sheet piece 120T, respectively. Note that no resin sheet 15 may be provided in the magnetic sheet piece 120T. The magnetic ribbon 20 may be exposed. In addition, instead of the resin sheet 15, for example, at least one of an amorphous alloy ribbon, a nanocrystalline alloy ribbon, another magnetic material, and a metal foil such as aluminum may be attached.

Further, it is preferable to provide a resin sheet on each of the upper surface and the lower surface of the magnetic sheet 110. The resin sheet can be used as a base material when the magnetic sheet pieces 120T are arranged, or can be used as a protective sheet.

As illustrated in FIG. 4, the adhesive layer 10 is a member to which the magnetic ribbon 20 is attached. The adhesive layer 10 is a member formed in a film shape. The adhesive layer 10 is provided with a support 11 and an adhesive 12.

The support 11 is a member formed in a film shape. The support 11 is formed using a flexible resin material. As the resin material, polyethylene terephthalate (PET) can be used.

The adhesive 12 is provided in a film shape or a layer shape on each of a first surface 11 A and a second surface 11B of the support 11.

As the adhesive 12, for example, a pressure- sensitive adhesive can be used. For example, a known adhesive such as an acrylic adhesive, a silicone-based adhesive, a urethane-based adhesive, a synthetic rubber, or a natural rubber can be used as the adhesive 12. The acrylic adhesive is preferable as the adhesive 12 because it is excellent in heat resistance and moisture resistance and has a wide range of materials that can be bonded. In the present embodiment, an example in which the adhesive 12 is provided on the entire surfaces of the first surface 11A and the second surface 11B of the support 11 will be described.

The magnetic ribbon 20 is a ribbon formed using a material having magnetism. A crack 21 is formed in the magnetic ribbon 20. The magnetic ribbon 20 is divided into a plurality of small pieces 22 by the crack 21. In other words, the magnetic ribbon 20 includes a plurality of small pieces 22. The crack 21 refers to a magnetic gap formed in the magnetic ribbon 20, and includes, for example, a breaking and/or a flaw of the magnetic ribbon 20.

When the crack 21 is formed in the magnetic ribbon 20, it is easy to improve a Q2 value in a case where the magnetic sheet 110 is used as a magnetic material for an inductor. In addition, in a case where the magnetic sheet 110 is used as a magnetic body for magnetic shielding, an eddy current loss can be easily reduced by dividing a current path of the magnetic ribbon 20.

As a material for forming the magnetic ribbon 20, an alloy having an Fe-based or Co-based alloy composition can be used, and a nanocrystalline alloy or an amorphous alloy can be used. The magnetic ribbon 20 is particularly preferably a ribbon formed using a nanocrystalline alloy as a material (hereinafter, also referred to as a "nanocrystalline alloy ribbon").

As the nanocrystalline alloy ribbon, a nanocrystalline alloy ribbon obtained by subjecting a non-crystalline alloy ribbon capable of nanocrystallization to heat treatment for nanocrystallization can be used. At the time of the heat treatment for nanocrystallization, it is preferable to perform heat treatment for nanocrystallization in a state where tension is applied to the non-crystalline alloy ribbon capable of nanocrystallization. Note that the ribbon formed using an amorphous alloy as a material is also referred to as an amorphous alloy ribbon or a non-crystalline alloy ribbon.

The nanocrystalline alloy ribbon preferably has a composition represented by the following general formula.

General Formula: $(Fe_{1-a}M_a)_{100-x-y-z-\alpha-\beta-\gamma}Cu_xSi_yB_zM'_\alpha M''_\beta X_\gamma$ (atom%)

In the above general formula, M is Co and/or Ni, M' is at least one element selected from the group consisting of Nb, Mo, Ta, Ti, Zr, Hf, V, Cr, Mn, and W, M'' is at least one element selected from the group consisting of Al, a platinum group element, Sc, a rare earth element, Zn, Sn, and Re, X is at least one element selected from the group consisting of C, Ge, P, Ga, Sb, In, Be, and As, and a, x, y, z, $\alpha$, $\beta$, and $\gamma$ satisfy $0 \leq a \leq 0.5$, $0.1 \leq x \leq 3$, $0 \leq y \leq 30$, $0 \leq z \leq 25$, $5 \leq y+z \leq 30$, $0 \leq \alpha \leq 20$, $0 \leq \beta \leq 20$, and $0 \leq \gamma \leq 20$.

Preferably, in the general formula, a, x, y, z, $\alpha$, $\beta$, and $\gamma$ satisfy $0 \leq a \leq 0.1$, $0.7 \leq x \leq 1.3$, $12 \leq y \leq 17$, $5 \leq z \leq 10$, $1.5 \leq \alpha \leq 5$, $0 \leq \beta \leq 1$, and $0 \leq \gamma \leq 1$.

In the present embodiment, there will be described an example in which the magnetic ribbon 20 is a ribbon (FT-3 manufactured by Protereal Ltd. (former Hitachi Metals Ltd.)) which is a Fe-Cu-Nb-Si-B-based nanocrystalline alloy. Note that the magnetic ribbon 20 may be a nanocrystalline alloy ribbon having another composition represented by the above general formula, or may be an amorphous alloy ribbon.

In a case where the magnetic ribbon 20 is a nanocrystalline alloy ribbon, the magnetic ribbon 20 is mechanically more brittle than when the magnetic ribbon is an amorphous alloy ribbon. In a case where the magnetic ribbon 20 is a nanocrystalline alloy ribbon, when an external force is directly applied to the magnetic ribbon 20 to form the crack 21, the crack 21 can be formed with a small external force.

In a case where the magnetic ribbon 20 is a nanocrystalline alloy ribbon, the crack 21 can be formed without substantially forming irregularities on the surface of the magnetic ribbon 20. This can make a planar state of the magnetic ribbon 20 favorable. A temporal change of the shape of the magnetic ribbon 20 generated after the magnetic ribbon 20 and the adhesive layer 10 are bonded to form the magnetic sheet piece 120T or the magnetic sheet 110 is reduced. It is possible to suppress a temporal change in magnetic characteristics in the magnetic sheet piece 120T or the magnetic sheet 110.

As the magnetic ribbon 20, for example, an alloy ribbon produced by roll quenching and having a thickness of 100 $\mu$m or less can be used. The thickness of the magnetic ribbon 20 is preferably 50 $\mu$m or less, more preferably 30 $\mu$m or less, still more preferably 25 $\mu$m or less, and particularly preferably 20 $\mu$m or less. On the other hand, it is difficult to handle the magnetic ribbon 20 when the thickness is small, and thus, the thickness of the magnetic ribbon 20 is preferably 5 $\mu$m or more, and more preferably 10 $\mu$m or more.

The magnetic ribbon 20, which is a nanocrystalline alloy ribbon, is obtained by producing an amorphous alloy ribbon and then performing heat treatment to generate nanocrystals. The magnetic ribbon 20 may have anisotropy of magnetic characteristics due to the production method.

To reduce a direct-current relative permeability ($\mu$r) of the magnetic ribbon 20, there is a method of reducing the size of the crack 21. In addition, there is a method in which an amorphous alloy ribbon is subjected to heat treatment of the amorphous alloy ribbon in a magnetic field, or tension is applied during the heat treatment of the amorphous alloy ribbon, whereby anisotropy is imparted to the amorphous alloy ribbon, and only the direct-current relative permeability ($\mu$r) in a predetermined direction is reduced.

For example, in a production method for obtaining a nanocrystalline alloy ribbon by bringing an elongated amorphous alloy ribbon into contact with a heating body to perform heat treatment while continuously conveying the elongated amorphous alloy ribbon, magnetic characteristics may be different between a longitudinal direction of the elongated amorphous alloy ribbon and a width direction orthogonal to the longitudinal direction. In the strip-shaped magnetic sheet piece 120S illustrated in FIG. 3A, the direction in which the long side 121 extends is the same as the longitudinal direction of the elongated shape, and the direction in which the short side 122 extends is the same as the width direction orthogonal to the longitudinal direction.

In the present embodiment, there will be described an example in which in the magnetic ribbon 20, the magnetic characteristics in the longitudinal direction (the direction in which the long side 121 extends) are superior to the magnetic characteristics in the width direction. The longitudinal direction of the magnetic ribbon 20 is the same as a casting direction. The casting direction is a direction in which the magnetic ribbon 20 is produced during casting. Specifically, the casting direction is a direction along the rotation direction of a cooling roll when a molten metal for forming the magnetic ribbon 20 is discharged to the cooling roll and cast. Note that in the magnetic ribbon 20, the magnetic characteristics in the width direction may be superior to the magnetic characteristics in the longitudinal direction.

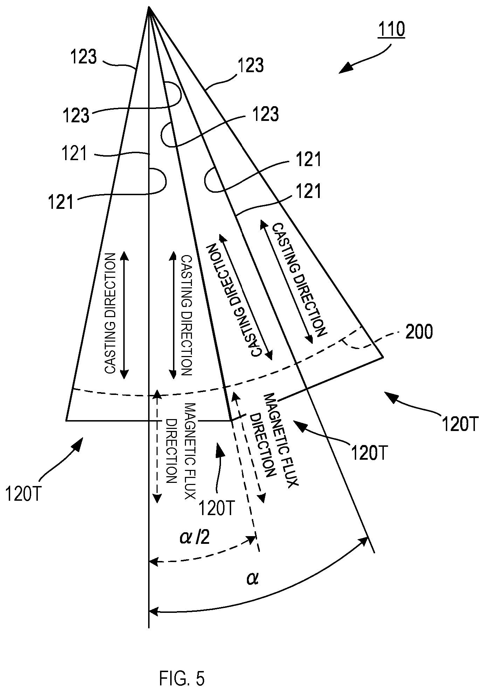

FIG. 5 is a view illustrating casting directions in the magnetic sheet pieces 120T arranged radially. Here, the casting direction is the same as a direction of anisotropy (direction in which the Q2 value is high).

As illustrated in FIG. 5, in a set of two magnetic sheet pieces 120T having the long sides 121 adjacent to each other, the casting directions are the same. The difference between the casting directions of adjacent sets of magnetic sheet pieces 120T among sets of magnetic sheet pieces 120T arranged radially is an angle $\alpha$.

A magnetic flux generated by the circular coil 200 flows in a direction perpendicular to the winding direction of the coil 200 (direction of the conductive wire of the coil) in the magnetic sheet 110. In other words, a magnetic flux direction (see FIG. 5), which is the direction in which the magnetic flux flows in the magnetic sheet 110, is a direction perpendicular to the winding direction of the coil 200 (direction of the conductive wire of the coil). In the magnetic sheet piece 120T, the magnetic flux direction varies between the direction in which the long side 121 extends and the direction in which the oblique side 123 extends. In other words, the magnetic flux direction in the magnetic sheet 110 is a radial direction from the central portion of the magnetic sheet 110 (portion corresponding to the central portion of the coil 200) toward the periphery.

A deviation angle between the casting direction in the magnetic sheet piece 120T, in other words, the direction in which the Q2 value is high (also referred to as a high Q direction) and the magnetic flux direction is maximized when the magnetic flux direction is the direction in which the oblique side 123 extends. The deviation angle which is maximum (also referred to as a maximum deviation angle) is $\alpha/2$.

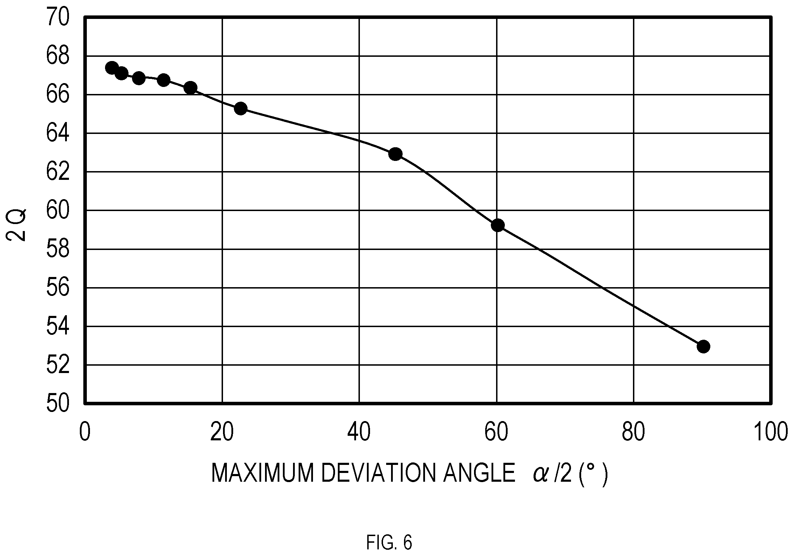

FIG. 6 is a graph showing a correlation between the maximum deviation angle and the Q2 value. In FIG. 6, the horizontal axis represents the maximum deviation angle $\alpha/2$ (°), and the vertical axis represents the Q2 value.

FIG. 6 shows a tendency that the Q2 value increases when the maximum deviation angle $\alpha/2$ decreases. In other words, it is shown that when the maximum deviation angle $\alpha/2$ decreases, the magnetic flux flows in a direction coinciding with the anisotropy, and the magnetic sheet 110 is likely to exhibit a magnetic shielding property.

The angle $\alpha$ is preferably 120° or less. The angle $\alpha$ is more preferably 90° or less, and still more preferably 45° or less. To produce the magnetic sheet piece 120T and the magnetic sheet 110, the angle $\alpha$ is preferably 5° or more, and preferably 10° or more.

In the above description, the relationship between the direction of anisotropy (casting direction) of the magnetic sheet piece 120T and the magnetic flux direction in the magnetic sheet piece 120T has been described. In other words, this can be described as the relationship between the direction of a current of the coil (direction of the conductor of the coil) and the direction of anisotropy (casting direction) of the magnetic ribbon (magnetic sheet piece).

That is, it can be said that the best relationship is that the direction of anisotropy of the magnetic ribbon (magnetic sheet piece 120T) and the direction of the current of the coil facing the magnetic ribbon (direction of the conductor of the coil) are orthogonal to each other.

As described above, the magnetic sheet is formed by combining a plurality of magnetic sheet pieces, and the magnetic sheet piece is formed of a magnetic ribbon. It is preferable that the direction of anisotropy of each magnetic ribbon and the direction of the current of the coil facing the magnetic ribbon (direction of the conductor of the coil) intersect each other, and the intersecting angle is 30° or more. The intersecting angle is preferably 45° or more, and more preferably 67.5° or more. The angle is preferably as close as possible to 90°.

Note that the coil facing the magnetic ribbon also has a non-linear portion. In this case, the tangential direction of the coil at the central portion of each magnetic ribbon can be regarded as the direction of the current of the coil (direction of the conductor of the coil).

In the above description, the relationship between the direction of the current of the coil (direction of the conductor of the coil) and the direction of anisotropy (casting direction) of the magnetic ribbon has been described. In other words, this can be described as a relationship of an angle between the direction of anisotropy of the magnetic ribbon and a normal line of the facing coil. In the present disclosure, the angle formed between the direction of anisotropy of the magnetic ribbon and the normal line of the facing coil is preferably 60° or less.

The normal line of the coil varies depending on a location in the circling coil. In any location of the coil, it is good to configure the sheet-shaped magnetic member in such a manner that the angle formed between the normal line of the coil and the direction of anisotropy of the magnetic ribbon facing the coil is within 60°. The angle is preferably 45° or less, and more preferably 22.5° or less. The angle is preferably as close as possible to 0°.

Here, the fact that the magnetic ribbon and the coil face each other indicates that the magnetic ribbon and the coil have a portion where the magnetic ribbon and the coil overlap each other when the magnetic ribbon and the coil are seen transparently in the axial direction of the coil (direction perpendicular to the plane of the magnetic sheet), and the overlapping portion is a portion where the magnetic ribbon and the coil face each other.

The magnetic ribbon 20 is bonded to the adhesive 12 of the adhesive layer 10. In the present embodiment, the magnetic ribbon 20 is bonded to the adhesive 12 provided on the first surface 11A of the adhesive layer 10.

The resin sheet 15 is a film-shaped member formed using a resin, and is also referred to as a protective film, a release film, or a liner. The resin sheet 15 is a member used for protecting the magnetic ribbon 20, the magnetic sheet piece 120S, the magnetic sheet piece 120T, and the magnetic sheet 110.

The resin sheet 15 has a function of suppressing unnecessary increase of the crack 21 (or a crack connecting a plurality of cracks 21 in a mesh shape) to be described below due to application of an unintended external force to the magnetic ribbon 20. In addition, it has a function of suppressing fall-off of the small pieces 22 of the magnetic ribbon 20 and a function of suppressing rusting of the magnetic ribbon 20.

In addition, the resin sheet 15 has a function of suppressing occurrence of unnecessary deformation when the magnetic sheet piece 120S, the magnetic sheet piece 120T, and the magnetic sheet 110 are processed into a predetermined shape. Examples of the unnecessary deformation include surface irregularities.

The resin sheet 15 is preferably a film-shaped member formed using a resin, and more preferably a member formed using a resin having elasticity. When the resin sheet 15 is a member formed using a resin, the generation of irregularities on the surface of the magnetic ribbon 20 is easily suppressed by an elastic force of the resin sheet 15.

Even if irregularities are generated on the surface of the magnetic ribbon 20, the irregularities of the magnetic ribbon 20 tend to become flat due to the elastic force of the resin sheet 15. This can make the planar state of the magnetic ribbon 20 a favorable state with few irregularities. It is possible to easily decrease a temporal change in magnetic characteristics in the magnetic sheet piece 120T and the magnetic sheet 110.

As the resin sheet 15, a resin having a lower limit of a tensile elastic modulus of 0.1 GPa can be used. When the tensile elastic modulus of the resin is 0.1 GPa or more, the above effect is easily obtained sufficiently. The lower limit of the tensile elastic modulus is preferably 0.5 GPa, and more preferably 1.0 GPa.

The upper limit of the tensile elastic modulus of the resin is preferably 10 GPa. When it exceeds 10 GPa, deformation of the alloy ribbon may be suppressed when the crack 21 to be described below is formed. The upper limit of the tensile elastic modulus is preferably 9 GPa, and more preferably 8 GPa.

In the resin sheet 15, the thickness of the resin sheet 15 is preferably 1 μm or more and 100 μm or less. When the thickness of the resin sheet 15 increases, the magnetic sheet piece 120S, the magnetic sheet piece 120T, and the magnetic sheet 110 are hardly deformed. It may be difficult to dispose the magnetic sheet piece 120S, the magnetic sheet piece 120T, and the magnetic sheet 110 along a curved surface or a bent surface.

When the thickness of the resin sheet 15 is less than 1 μm, deformation of the resin sheet 15 is facilitated. It is difficult to handle the resin sheet 15, and the function of supporting the magnetic ribbon 20 by the resin sheet 15 may not be sufficiently obtained. In a case where the resin sheet 15 is a protective film, the strength of the resin sheet 15 becomes weak, and the function of protecting the magnetic ribbon 20 and the like may not be sufficient.

As the resin of the resin sheet 15, for example, polyethylene terephthalate (PET), polyimide, polyetherimide, polyethylene naphthalate, polypropylene, polyethylene, polystyrene, polycarbonate, polysulfone, polyetherketone, polyvinyl chloride, polyvinyl alcohol, a fluororesin, an acrylic resin, cellulose, or the like can be used. Polyamide and polyimide are particularly preferable as the resin for forming the resin sheet 15 from the viewpoint of heat resistance and dielectric loss.

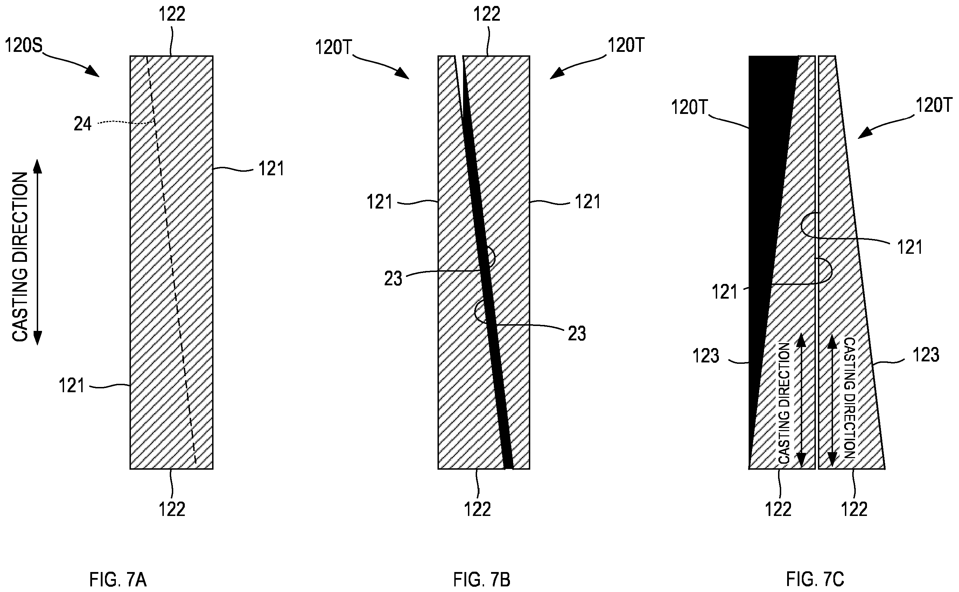

FIGS. 7A to 7C are views illustrating a method for forming the magnetic sheet piece 120T from a strip shape into a trapezoidal shape.

Note that the magnetic sheet piece 120T may have a triangular shape or a trapezoidal shape as described above. Specifically, as illustrated in FIGS. 7A to 7C, the magnetic sheet piece may be a magnetic sheet piece 120T having a trapezoidal shape formed from the strip-shaped magnetic sheet piece 120S.

As illustrated in FIGS. 7A and 7C, the trapezoidal magnetic sheet piece 120T is formed by performing cutting along a cutting line 24 intersecting with two short sides 122 of the strip-shaped magnetic sheet piece 120S at positions intersecting with vicinities of two diagonally opposite corners. As illustrated in FIG. 7B, the short side 122 corresponds to the upper base or the lower base of the trapezoidal magnetic sheet piece 120T.

As illustrated in FIG. 7C, the formed two trapezoidal magnetic sheet pieces 120T are arranged as a set in which the long sides 121 are adjacent to each other. Such sets may be radially arranged to constitute the magnetic sheet 110.

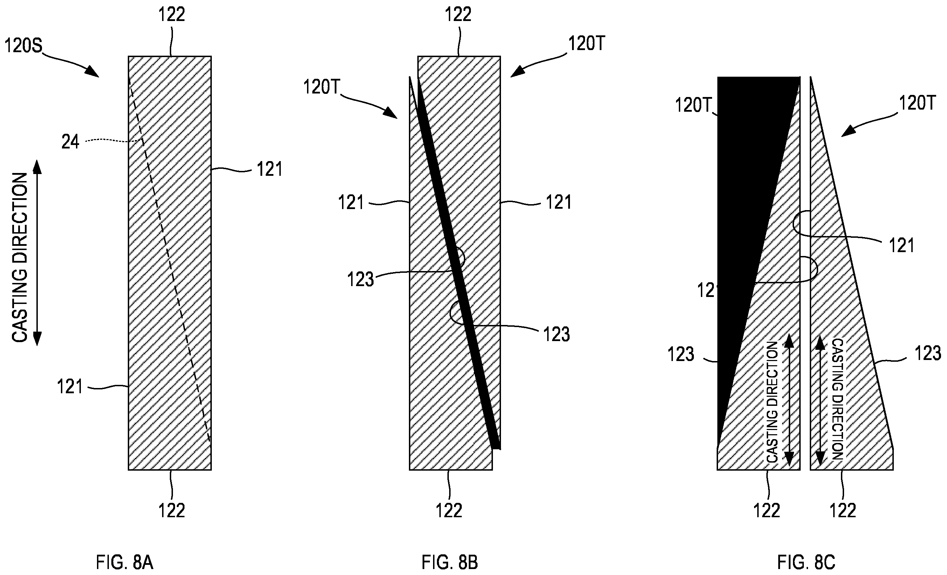

FIGS. 8A to 8C are views illustrating a method for forming the magnetic sheet piece 120T from a strip shape into a triangular shape with a cutout.

The magnetic sheet piece 120T may have a triangular shape with a cutout. Specifically, as illustrated in FIGS. 8A to 8C, the magnetic sheet piece may be a magnetic sheet piece 120T having a triangular shape with a cutout formed from the strip-shaped magnetic sheet piece 120S.

As illustrated in FIGS. 8A and 8C, the cutout triangular magnetic sheet piece 120T is formed by performing cutting along a cutting line 24 intersecting with two long sides 121 of the strip-shaped magnetic sheet piece 120S at positions interesting with vicinities of two diagonally opposite corners.

As illustrated in FIG. 8C, the formed two cutout triangular magnetic sheet pieces 120T are arranged as a set in which the long sides 121 are adjacent to each other. Such sets may be radially arranged to constitute the magnetic sheet 110.

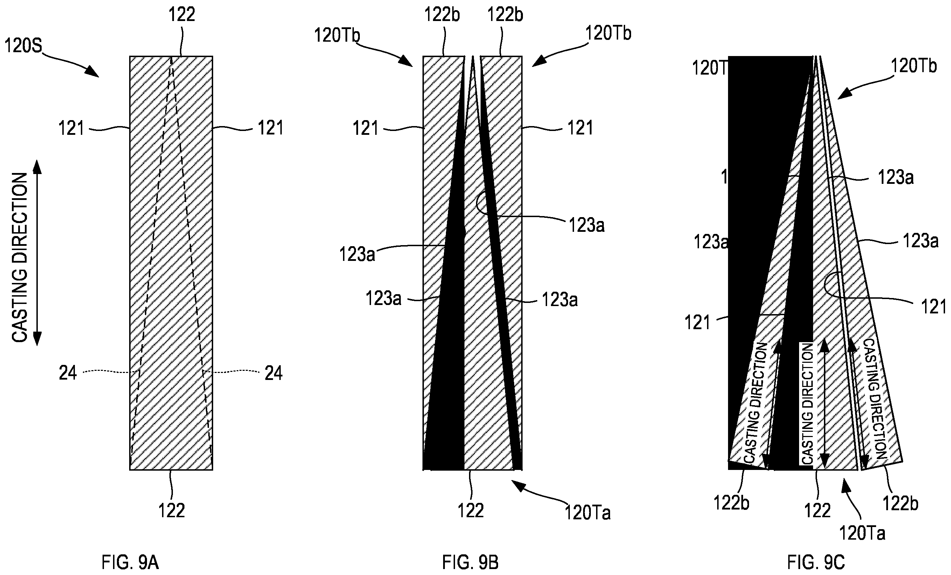

FIGS. 9A to 9C are views illustrating a method for forming the magnetic sheet piece 120T from a strip shape into two types of triangular shapes.

The magnetic sheet piece 120T may have a magnetic sheet piece 120Ta and a magnetic sheet piece 120Tb having two types of triangular shapes. Specifically, as illustrated in FIGS. 9A to 9C, the magnetic sheet piece may be the magnetic sheet piece 120Ta and the magnetic sheet piece 120Tb each having a triangular shape with a cutout formed from the strip-shaped magnetic sheet piece 120S.

As illustrated in FIGS. 9A and 9C, the magnetic sheet piece 120Ta and the magnetic sheet piece 120Tb are formed by cutting the strip-shaped magnetic sheet piece 120S along two cutting lines 24. The two cutting lines 24 are lines extending from the center of the short side 122 of the strip-shaped magnetic sheet piece 120S toward two opposing corners.

The magnetic sheet piece 120Ta has an isosceles triangular shape having one short side 122 and two oblique sides 123a. The magnetic sheet piece 120Tb has a right triangular shape having one long side 121, one short side 122b, and one oblique side 123a.

As illustrated in FIG. 9C, one magnetic sheet piece 120Ta and two magnetic sheet pieces 120Tb formed from one strip-shaped magnetic sheet piece 120S are arranged as a set. Specifically, the magnetic sheet piece 120Ta is disposed between the two magnetic sheet pieces 120Tb. The oblique side 123a of the magnetic sheet piece 120Ta and the long side 121 of the magnetic sheet piece 120Tb are arranged adjacently to each other. Such sets may be radially arranged to constitute the magnetic sheet 110.

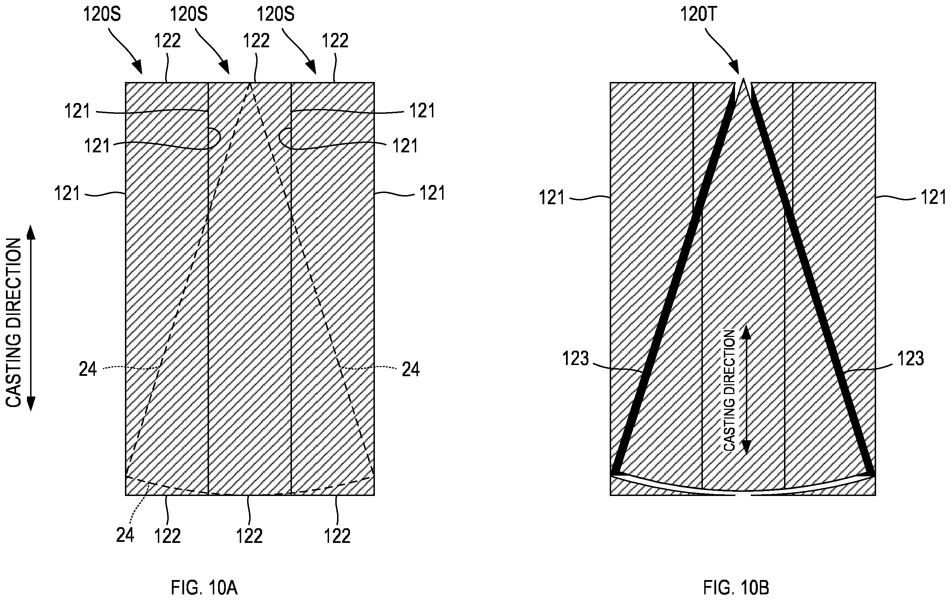

FIGS. 10A and 10B are views illustrating a method for forming one magnetic sheet piece 120T from a strip shape obtained by arranging three magnetic sheet pieces 120S.

The one magnetic sheet piece 120T having a fan shape may be formed of a plurality of magnetic sheet pieces 120S. FIGS. 10A and 10B illustrate an example in which one magnetic sheet piece 120T is formed of three magnetic sheet pieces 120S. The number of strip-shaped magnetic sheet pieces 120S forming one magnetic sheet piece 120T may be 2 or 4 or more.

When the plurality of magnetic sheet pieces 120S are arranged to form one strip shape, for example, the magnetic sheet pieces 120S can be attached to a base material along a rectangular shape in an arranged state to be integrated. Here, as the base material, the same material as the resin sheet 15 can be used. At this time, the magnetic sheet pieces 120S may be arranged to overlap each other, the magnetic sheet pieces 120S may be arranged to abut on each other, or the magnetic sheet pieces 120S may be arranged with an interval therebetween.

As illustrated in FIG. 10A, three strip-shaped magnetic sheet pieces 120S are arranged in the width direction. That is, the long sides 121 are arranged adjacently to each other. The three aligned magnetic sheet pieces 120S are cut along three cutting lines 24.

Among the three cutting lines 24, two are lines extending from the center of the short side 122 of the magnetic sheet piece 120S disposed at the center in the width direction toward the outer long sides 121 of the magnetic sheet pieces 120S on both sides. The remaining one is an arc in contact with the other short side 24 of the magnetic sheet piece 120S disposed at the center, and is a line whose both ends intersect the other two cutting lines 24. By cutting the magnetic sheet pieces 120S, one fan-shaped magnetic sheet piece 120T as illustrated in FIG. 10B is formed.

Note that the magnetic sheet 110 may include magnetic sheet pieces 120T having the same shape, or may include magnetic sheet pieces 120T having different shapes. For example, the magnetic sheet 110 may include magnetic sheet pieces 120T having two types of shapes, or may include magnetic sheet pieces 120T having three or more types of shapes.

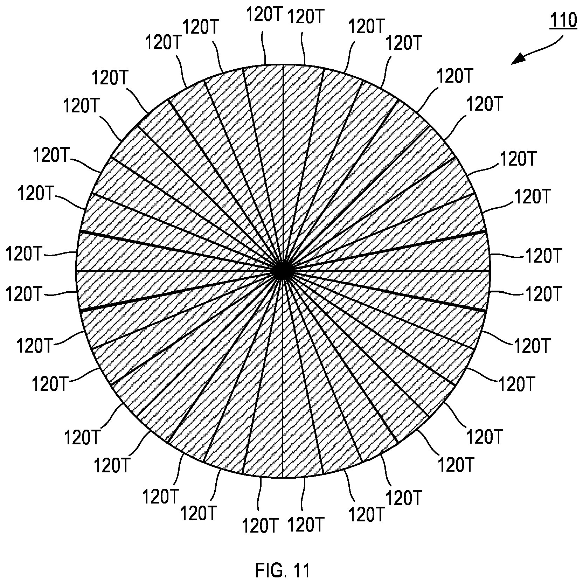

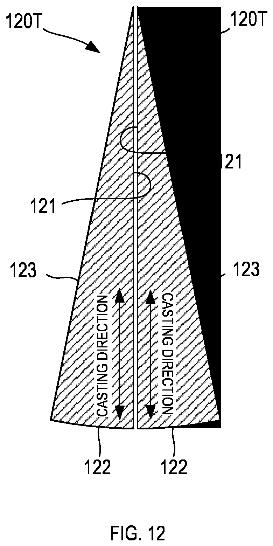

FIG. 11 is a plan view illustrating a configuration of a magnetic sheet 110 having a circular shape. FIG. 12 is a plan view illustrating a shape of a magnetic sheet piece 120T constituting the magnetic sheet 110 in FIG. 11.

The magnetic sheet 110 may have a polygonal shape as described above, or may have a circular shape as illustrated in FIG. 11. As illustrated in FIG. 12, the circular magnetic sheet 110 is configured using a plurality of magnetic sheet pieces 120T each having a fan shape in which the short side 122 is curved in an arc shape.

In FIG. 11, the central portion of the magnetic sheet 110 may be a hole. In this case, the size of the hole is smaller than the inner diameter of the coil.

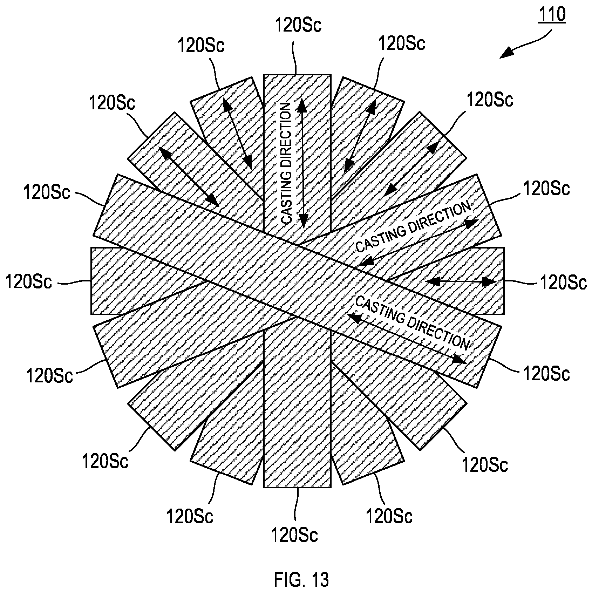

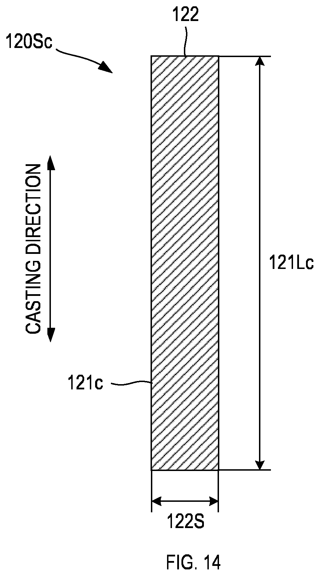

FIG. 13 is a plan view illustrating another configuration of the magnetic sheet 110. FIG. 14 is a plan view illustrating a shape of a strip-shaped magnetic sheet piece 120S constituting the magnetic sheet in FIG. 13.

Furthermore, the magnetic sheet 110 may be formed using a plurality of magnetic sheet pieces 120T each having a triangular shape as described above, or may be formed using a plurality of magnetic sheet pieces 120Sc each having a strip shape as illustrated in FIGS. 13 and 14.

FIG. 13 illustrates the magnetic sheet 110 formed using eight magnetic sheet pieces 120Sc each having a strip shape. The eight magnetic sheet pieces 120Sc each having a strip shape are radially arranged.

As illustrated in FIG. 14, the magnetic sheet pieces 120Sc each have two long sides 121c and two short sides 122. A length 121Lc of the long side 121c may be longer than the length 121L of the long side 121 in the magnetic sheet piece 120S illustrated in FIG. 3A. Preferably, the length 121Lc has a length of about 2 times the length 121L.

When the magnetic sheet 110 is formed using the magnetic sheet pieces 120Sc each having a strip shape, the number of steps in producing the magnetic sheet 110 can be reduced as compared with a case of forming the magnetic sheet 110 using the triangular magnetic sheet pieces 120T.

In FIG. 13, the central portion of the magnetic sheet 110 may be a hole. In this case, the size of the hole is smaller than the inner diameter of the coil.

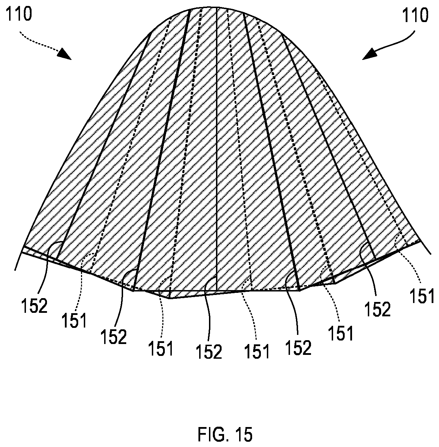

FIG. 15 is a partially enlarged view illustrating a configuration of a magnetic sheet 110 in which magnetic sheet pieces 120T are laminated in multiple layers.

The magnetic sheet 110 may include one layer of the magnetic sheet pieces 120T as described above, or may include a plurality of layers of the magnetic sheet pieces 120T. FIG. 15 illustrates an example in which the magnetic sheet 110 includes two layers of the magnetic sheet pieces 120T. In other words, an example in which a first magnetic sheet 110 and a second magnetic sheet 110 are laminated is illustrated.

In FIG. 15, the first magnetic sheet 110 and the second magnetic sheet 110 are laminated in a direction perpendicular to the paper surface. The first magnetic sheet 110 disposed on the back side of the paper is illustrated by a dotted line.

A first adjacent position 151 in the first magnetic sheet 110 and a second adjacent position 152 in the second magnetic sheet 110 are different positions as viewed in the laminating direction.

The first adjacent position 151 and the second adjacent position 152 are positions where adjacent magnetic sheet pieces 120T are in contact with each other. For example, at the positions, the long sides 121 of the adjacent magnetic sheet pieces 120T are in contact with each other, the oblique sides 123 are in contact with each other, or the long side 121 and the oblique side 123 are in contact with each other.

In a case of constituting the magnetic sheet 110 in which the magnetic sheet pieces 120T are laminated in multiple layers, as described above, by laminating the magnetic sheet pieces while shifting the adjacent positions, it is possible to suppress continuous generation of the magnetic gaps, thereby improving the characteristics of the magnetic sheet.

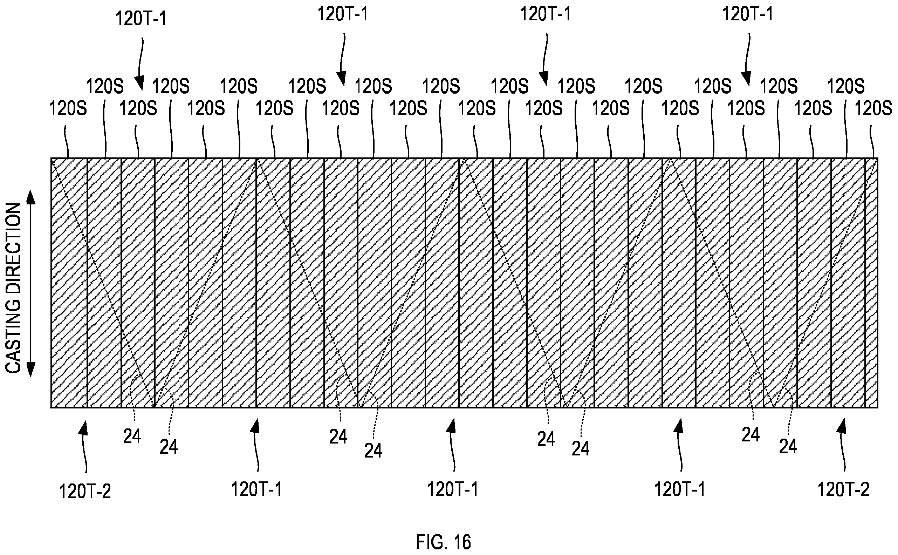

FIG. 16 is a view illustrating a method of forming magnetic sheet pieces 120T-1 each having an equilateral triangular shape and magnetic sheet pieces 120T-2 each having a right triangular shape from a plurality of strip-shaped magnetic sheet pieces 120S.

The plurality of strip-shaped magnetic sheet pieces 120S are aligned and integrated in the width direction as illustrated in FIG. 16. FIG. 16 illustrates a state in which 24 to 25 magnetic sheet pieces 120S are integrated.

The integrated magnetic sheet pieces 120S are cut along cutting lines 24. The cutting lines 24 have a shape forming seven magnetic sheet pieces 120T-1 each having an equilateral triangular shape and two magnetic sheet pieces 120T-2 each having a right triangular shape from the integrated strip-shaped magnetic sheet pieces 120S.

The two right triangular magnetic sheet pieces 120T-2 are located at both ends of the integrated magnetic sheet pieces 120S, and the seven equilateral triangular magnetic sheet pieces 120T-1 are located between the two right triangular magnetic sheet pieces 120T-2.

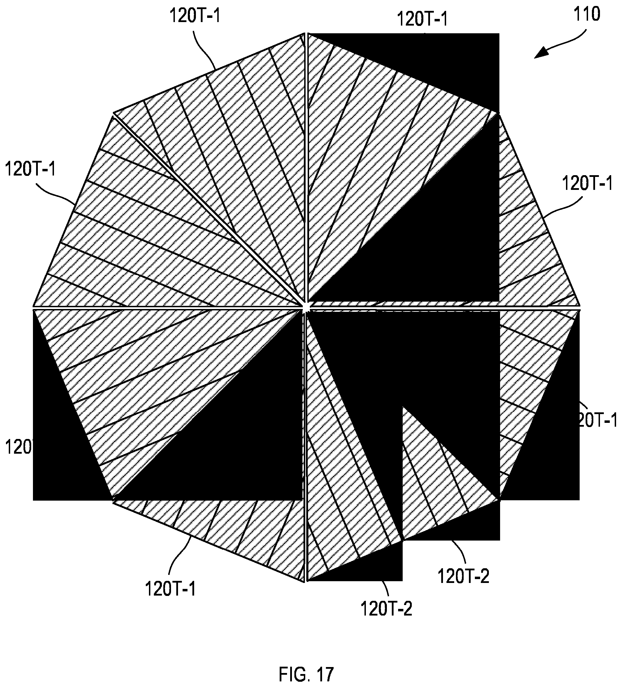

FIG. 17 is a view illustrating a configuration of a magnetic sheet 110 having an octagonal shape.

The formed seven equilateral triangular magnetic sheet pieces 120T-1 and the formed two right triangular magnetic sheet pieces 120T-2 are arranged in an octagonal shape to form the magnetic sheet 110 as illustrated in FIG. 17. In other words, the seven equilateral triangular magnetic sheet pieces 120T-1 and the two right triangular magnetic sheet pieces 120T-2 are radially arranged to form the magnetic sheet 110.

In FIG. 17, the central portion of the magnetic sheet 110 may be a hole. In this case, the size of the hole is smaller than the inner diameter of the coil.

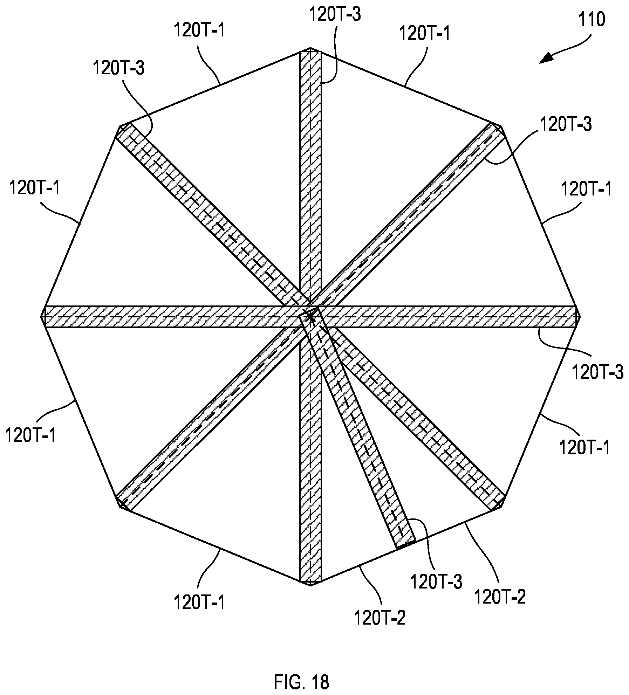

FIG. 18 is a view illustrating a state in which magnetic sheet pieces 120T-3 for covering are disposed on the magnetic sheet 110 in FIG. 17.

As illustrated in FIG. 18, the magnetic sheet pieces 120T-3 for covering may be disposed on the magnetic sheet 110 in FIG. 17. The magnetic sheet pieces 120T-3 for covering are each formed in a rectangular shape and attached to the magnetic sheet 110.

Positions to which the magnetic sheet pieces 120T-3 for covering are attached are at least one of a position where the two equilateral triangular magnetic sheet pieces 120T-1 are adjacent, a position where the equilateral triangular magnetic sheet piece 120T-1 and the right triangular magnetic sheet piece 120T-2 are adjacent, and a position where the two right triangular magnetic sheet pieces 120T-2 are adjacent. FIG. 18 illustrates a state in which the magnetic sheet pieces 120T-3 for covering are attached to all positions.

The above-described adjacent positions are each a position where a magnetic gap is likely to be formed. The influence of the magnetic gap can be suppressed by attaching the magnetic sheet pieces 120T-3 for covering to the adjacent positions.

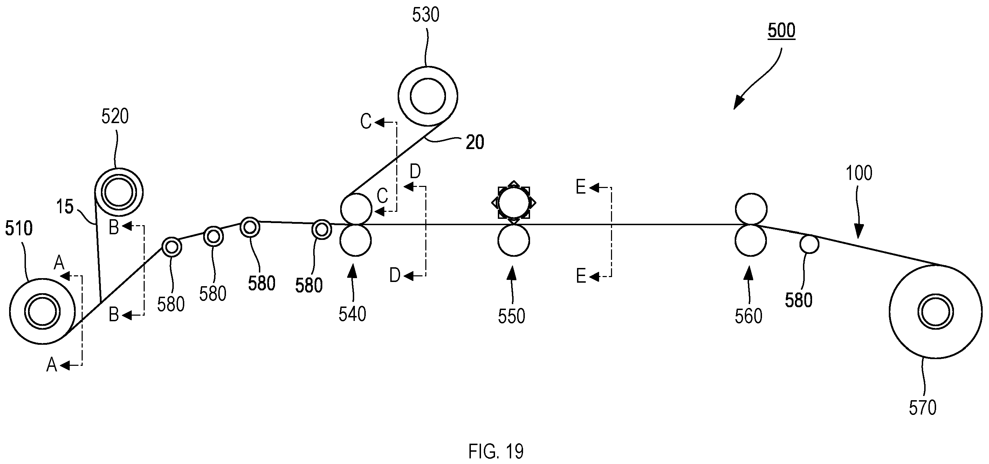

Next, a method for producing the magnetic sheet 110 will be described with reference to FIGS. 19 to 25. First, a method for producing the magnetic sheet piece 120S constituting the magnetic sheet 110 and the magnetic sheet piece 120T will be described.

FIG. 19 is a schematic view illustrating a method for producing the magnetic sheet piece 120S.

The magnetic sheet piece 120S is a magnetic sheet constituting the magnetic sheet 110 and the magnetic sheet piece 120T. The magnetic sheet piece 120S is produced using a production apparatus 500 illustrated in FIG. 19. The production apparatus 500 is provided with a first unwinding roll 510, a first winding roll 520, a second unwinding roll 530, an attaching roll 540, a crack roll 550, a flattening roll 560, and a third winding roll 570 from upstream to downstream of the production process. The production apparatus 500 may further be provided with a plurality of guide rolls 580. Note that the guide rolls 580 can be disposed as necessary even at a position not illustrated.

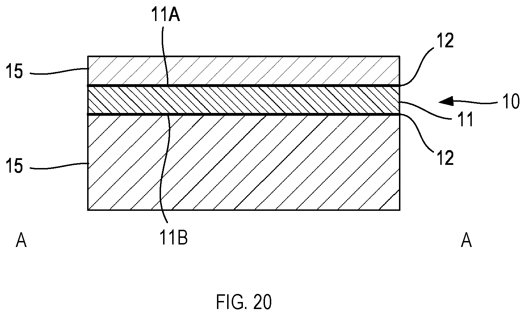

FIG. 20 is a cross-sectional view illustrating a configuration of a laminate supplied from the first unwinding roll 510.

A laminate in which the resin sheet 15 is laminated on each of the first surface 11A and the second surface 11B of the adhesive layer 10 as illustrated in FIG. 20 is wound around the first unwinding roll 510. The resin sheet 15 disposed on the first surface 11A is a protective sheet, and the resin sheet 15 disposed on the second surface 11B is also referred to as a liner. The resin sheet 15 disposed on the first surface 11A is a sheet thinner than the resin sheet 15 disposed on the second surface 11B.

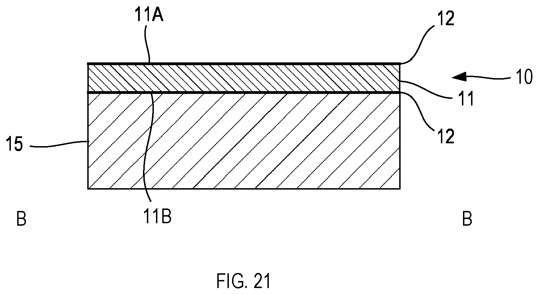

FIG. 21 is a cross-sectional view illustrating a configuration of the laminate supplied from the first unwinding roll 510, from which the resin sheet 15 has been peeled off.

In the laminate unwound from the first unwinding roll 510, the resin sheet 15 disposed on the first surface 11A is peeled off as illustrated in FIG. 21. As illustrated in FIG. 19, the peeled resin sheet 15 is wound around the first winding roll 520.

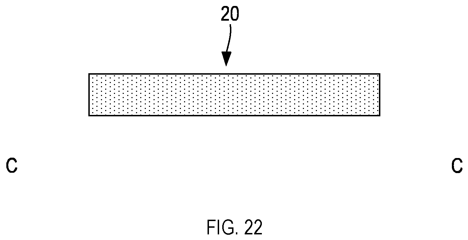

FIG. 22 is a cross-sectional view illustrating a configuration of the magnetic ribbon 20 supplied from the second unwinding roll 530.

The laminate from which the resin sheet 15 disposed on the first surface 11A has been peeled off is guided to the attaching roll 540 by the plurality of guide rolls 580. The magnetic ribbon 20 unwound from the second unwinding roll 530 is further guided to the attaching roll 540. As illustrated in FIG. 22, no crack 21 is formed in the magnetic ribbon 20 guided to the attaching roll 540.

Here, a method for producing the magnetic ribbon 20 unwound from the second unwinding roll 530 will be described. For example, a case where the magnetic ribbon 20 is a nanocrystalline alloy will be described. The magnetic ribbon 20 is produced by a production method including: a step of quenching a molten alloy to obtain an amorphous alloy ribbon capable of nanocrystallization; and a heat treatment step of heat-treating the amorphous alloy ribbon at a temperature equal to or higher than a crystallization start temperature to form fine crystal grains.

The quenching described above is performed by a single roll method in which a molten metal is discharged onto a rotating cooling roll and quenched to be solidified. The magnetic ribbon 20 has an elongated shape in which a direction along a rotation direction of the cooling roll is a longitudinal direction. The length of the magnetic ribbon 20 in the longitudinal direction may be, for example, 20000 m.

The temperature of the heat treatment varies depending on the alloy composition, but is generally 450°C or higher. The fine crystal grains are, for example, Fe having a body-centered cubic lattice structure in which Si or the like is solid-solved. The fine crystal grains can be analyzed using X-ray diffraction and a transmission electron microscope.

In the nanocrystalline alloy, at least 50 vol% of the nanocrystalline alloy is occupied by fine crystal grains having an average grain size of 100 nm or less as measured in the maximum dimension. In addition, a portion other than the fine crystal grains in the nanocrystalline alloy is mainly amorphous. The proportion of fine grains may be substantially 100 vol%.

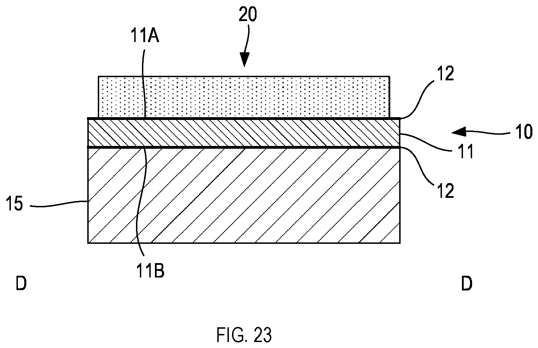

FIG. 23 is a cross-sectional view illustrating a state in which the magnetic ribbon 20 is bonded to the adhesive layer 10 by the attaching roll 540.

As illustrated in FIG. 19, the attaching roll 540 presses and bonds the magnetic ribbon 20 against and to the laminate from which the resin sheet 15 has been peeled off. Specifically, the laminate and the magnetic ribbon 20 are guided between two rolls disposed to face each other, and the magnetic ribbon 20 is pressed against and bonded to the first surface 11A of the adhesive layer 10 using the two rolls, as illustrated in FIG. 23.

As illustrated in FIG. 19, the laminate to which the magnetic ribbon 20 has been bonded is guided to the crack roll 550 from the attaching roll 540.

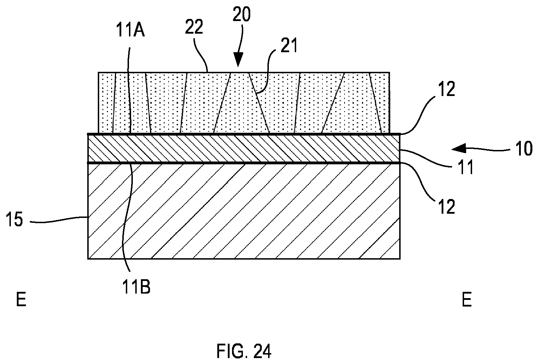

FIG. 24 is a cross-sectional view illustrating a state in which cracks 21 have been formed in the magnetic ribbon 20 by the crack roll 550.

The crack roll 550 forms the cracks 21 in the magnetic ribbon 20 bonded to the adhesive layer 10. Specifically, the laminate to which the magnetic ribbon 20 has been bonded is guided between two rolls disposed to face each other, and a roll provided with protrusions of the two rolls is pressed against the magnetic ribbon 20 to form the cracks 21 as illustrated in FIG. 24.

Of the two rolls, the roll provided with no protrusion is disposed on a side of the laminate from which the resin sheet 15 has been peeled off. The magnetic ribbon 20 in which the cracks 21 have been formed includes a plurality of small pieces 22. The plurality of small pieces 22 are bonded to the adhesive layer 10.

Here, a configuration of the crack roll 550 will be described. The crack roll 550 is a roll in which a plurality of convex members are arranged on the peripheral surface. A tip of an end of each of the convex members of the crack roll 550 may be flat, conical, inverted conical with the center recessed, or cylindrical. The plurality of convex members may be arranged regularly or irregularly.

When the elongated magnetic ribbon 20 is pressed against the crack roll 550 or the elongated magnetic ribbon 20 is caused to pass between two crack rolls 550, the cracks 21 are continuously formed in the magnetic ribbon 20. In addition, the convex members of the crack roll 550 are pressed against a plurality of locations on the surface of the magnetic ribbon 20, whereby a plurality of cracks 21 are formed in the magnetic ribbon 20.

In crack formation using the crack roll 550, it is preferable to further form a crack connecting the plurality of cracks 21 in a mesh shape. Specifically, it is preferable to include a step of forming a crack connecting a plurality of cracks 21 in a mesh shape after pressing the crack roll 550 against the magnetic ribbon 20 to form the plurality of cracks 21.

For example, after the cracks 21 are formed by directly applying an external force to the magnetic ribbon 20 using the crack roll 550, a second external force may be applied by means such as bending or winding the magnetic ribbon 20 to form a crack connecting the plurality of cracks 21 in a mesh shape. The crack connecting the cracks 21 (magnetic gap connecting the cracks) is formed with the cracks 21 as starting points of brittle fracture and/or crack fracture.

In the step of forming a crack connecting the plurality of cracks 21 in a mesh shape, the second external force as described above need not be applied. When the second external force is not applied, the crack connecting the plurality of cracks 21 in a mesh shape is formed in the process of forming the plurality of cracks 21.

The laminate 100 guided from the crack roll 550 to the flattening roll 560 is flattened by the flattening roll 560. The flattening roll 560 is also referred to as a shaping roll.

Specifically, the laminate is guided between two rolls disposed to face each other in the flattening roll 560, and the laminate is sandwiched and pressed by the two rollers. As a result, the surface of the magnetic ribbon 20 in which the cracks 21 has been formed is flattened.

The laminate 100 subjected to the flattening treatment is guided to the third winding roll 570 via the guide roll 580. The laminate 100 is wound around the third winding roll 570.

The laminate 100 includes one layer of the magnetic ribbon 20, the adhesive layer 10, and the resin sheet 15, and can be used as the magnetic sheet piece 120S. In addition, the magnetic sheet piece 120S having another configuration can be produced using this laminate.

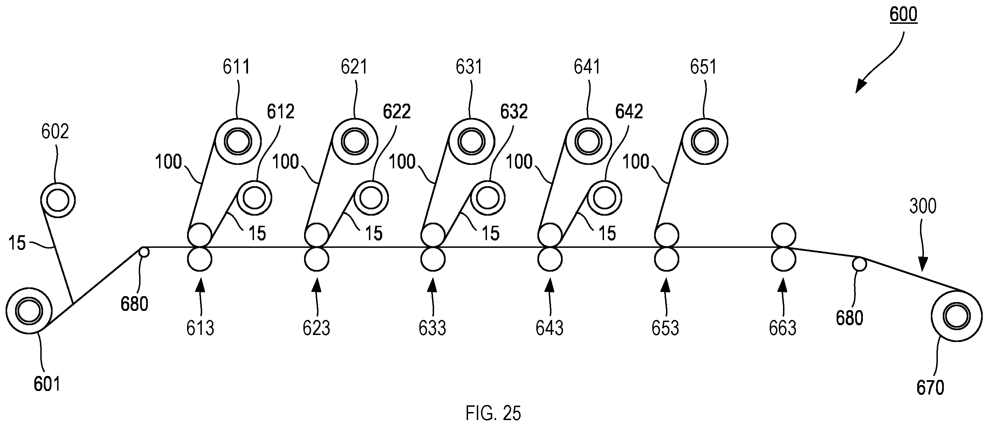

FIG. 25 is a schematic view illustrating another example of the method for producing the magnetic sheet piece 120S.

The magnetic sheet piece 120S is produced using a production apparatus 600 illustrated in FIG. 25. FIG. 25 illustrates the production apparatus 600 that produces the magnetic sheet piece 120S including five layers of the magnetic ribbons 20.

The production apparatus 600 is provided with a feeding roll 601, a resin sheet winding roll 602, a first magnetic sheet unwinding roll 611, a first winding roll 612, a first attaching roll 613, a second magnetic sheet unwinding roll 621, a second winding roll 622, a second attaching roll 623, a third magnetic sheet unwinding roll 631, a third winding roll 632, a third attaching roll 633, a fourth magnetic sheet unwinding roll 641, a fourth winding roll 642, a fourth attaching roll 643, a fifth magnetic sheet unwinding roll 651, a fifth attaching roll 653, a flattening roll 663, and a laminated substrate winding roll 670 from upstream to downstream in the production process. The production apparatus 600 may further be provided with a plurality of guide rolls 680. Note that the guide rolls 680 can be disposed as necessary even at a position not illustrated.

Note that the production apparatus 600 may produce the magnetic sheet piece 120S in which the number of layers of the magnetic ribbons 20 is two or more and 20 or less. In this case, the number of the first magnetic sheet unwinding roll 611 and the like is changed depending on the number of the magnetic ribbons 20. In addition, the magnetic ribbon unwound from the unwinding roll 611 and the like can be a multilayer magnetic ribbon. Note that the number of layers of the magnetic ribbons 20 of the magnetic sheet piece 120S to be prepared only need be appropriately determined.

However, in a case of winding the magnetic sheet piece 120S, in a case where the number of layers of the magnetic ribbons 20 is large, winding may be difficult, or a shape defect may occur at the time of winding. Thus, when the magnetic sheet piece 120S is wound, the number of layers is preferably 15 or less. The number of layers is more preferably 10 or less. In addition, the number of layers of the magnetic ribbons 20 is preferably 2 or more, preferably 3 or more, and preferably 4 or more. Although it is possible to prepare the magnetic sheet piece 120S of more than 20 layers, the apparatus becomes too large, and thus, 20 layers or less is preferable.

As illustrated in FIG. 20, a laminate in which the resin sheet 15 is laminated on each of the first surface 11A and the second surface 11B of the adhesive layer 10 is wound around the feeding roll 601.

In the laminate unwound from the feeding roll 601, the resin sheet 15 disposed on the first surface 11A is peeled off as illustrated in FIG. 21. As illustrated in FIG. 25, the peeled resin sheet 15 is wound around the resin sheet winding roll 602.

The laminate from which the resin sheet 15 disposed on the first surface 11A has been peeled off is guided to the first attaching roll 613 by the guide roll 680. A laminate 100 (laminate 100 prepared in FIG. 19) unwound from the first magnetic sheet unwinding roll 611 is further guided to the first attaching roll 613.

The first attaching roll 613 presses and bonds another laminate 100 against and to the laminate from which the resin sheet 15 has been peeled off. Specifically, the laminate and another laminate 100 are guided between two rolls disposed to face each other, and the magnetic ribbon 20 of the other laminate 100 is pressed against and bonded to the first surface 11A of the adhesive layer 10 using the two rolls.

The resin sheet 15 of the laminate 100 bonded by the first attaching roll 613 is peeled off from the laminate and wound around the first winding roll 612. The laminate after the resin sheet 15 is wound around the first winding roll 612 is guided to the second attaching roll 623. A laminate 100 unwound from the second magnetic sheet unwinding roll 621 is further guided to the second attaching roll 623.

The second attaching roll 623 presses and bonds another laminate 100 against and to the laminate guided from the first attaching roll 613. Here, the magnetic ribbon 20 of the other laminate 100 is pressed against and bonded to the laminate guided from the first attaching roll 613.

The resin sheet 15 of the laminate 100 bonded by the second attaching roll 623 is peeled off from the laminate and wound around the second winding roll 622.

The laminate after the resin sheet 15 is wound around the second winding roll 622 is guided to the third attaching roll 633. A laminate 100 unwound from the third magnetic sheet unwinding roll 631 is further guided to the third attaching roll 633.

The third attaching roll 633 presses and bonds another laminate 100 against and to the laminate guided from the second attaching roll 623. Here, the magnetic ribbon 20 of the other laminate 100 is pressed against and bonded to the laminate guided from the second attaching roll 623.

The resin sheet 15 of the laminate 100 bonded by the third attaching roll 633 is peeled off from the laminate and wound around the third winding roll 632.

The laminate after the resin sheet 15 is wound around the third winding roll 632 is guided to the fourth attaching roll 643. A laminate 100 unwound from the fourth magnetic sheet unwinding roll 641 is further guided to the fourth attaching roll 643.

The fourth attaching roll 643 presses and bonds another laminate 100 against and to the laminate guided from the third attaching roll 633. Here, the magnetic ribbon 20 of the other laminate 100 is pressed against and bonded to the laminate guided from the third attaching roll 633.

The resin sheet 15 of the laminate 100 bonded by the fourth attaching roll 643 is peeled off from the laminate and wound around the fourth winding roll 642.

The laminate after the resin sheet 15 is wound around the fourth winding roll 642 is guided to the fifth attaching roll 653. A laminate 100 unwound from the fifth magnetic sheet unwinding roll 651 is further guided to the fifth attaching roll 653.

The fifth attaching roll 653 presses and bonds another laminate 100 against and to the laminate guided from the fourth attaching roll 643. Here, the magnetic ribbon 20 of the other laminate 100 is pressed against and bonded to the laminate guided from the fourth attaching roll 643.

The laminate guided from the fifth attaching roll 653 to the flattening roll 663 is flattened by the flattening roll 663.

The laminate subjected to the flattening treatment is guided to the laminated substrate winding roll 670 via the guide roll 680. A laminate 300 is wound around the laminated substrate winding roll 670.

Note that the laminate 300 may be continuously cut to a required length in addition to the method of being wound around the laminated substrate winding roll 670.

As illustrated in FIG. 3A, the laminate 300 produced by the production apparatus 600 is cut in such a manner that the long side 121 has the length 121L, thereby obtaining the strip-shaped magnetic sheet piece 120S. The strip-shaped magnetic sheet piece 120S is cut along the cutting line 24 to become two triangular magnetic sheet pieces 120T as illustrated in FIG. 3B.

Alternatively, after the laminates 300 are arranged and integrated, the laminates may be processed into the shape of FIGS. 2B or 3B. For example, as illustrated in FIGS. 10 and 16, the laminate 300 can be used as the magnetic sheet piece 120S. The laminates 300 can be further laminated and used as the magnetic sheet piece 120S.

Next, characteristics of the magnetic sheet 110 having the above configuration will be described with reference to FIG. 1.

When a current flows through the coil 200, a magnetic flux is formed around the coil 200. The magnetic flux flows in a direction perpendicular to the paper surface of FIG. 1 at the center of the circling coil 200. For example, the magnetic flux flows from the coil 200 toward the magnetic sheet 110.

The magnetic flux penetrating the center of the coil 200 flows inside the magnetic sheet 110 toward the outer periphery of the coil 200. In other words, the magnetic flux radially flows inside the magnetic sheet 110 from the center of the coil 200 toward the outer periphery.

In the magnetic sheet 110, which is a magnetic path, a plurality of magnetic sheet pieces 120T are radially arranged. That is, the plurality of magnetic sheet pieces 120T are arranged in such a manner that the casting directions are radially arranged. In other words, the plurality of magnetic sheet pieces 120T are arranged in such a manner that the casting direction coincides with the direction of the magnetic flux in the magnetic sheet 110 generated by the current flowing through the circling coil 200. More preferably, the plurality of magnetic sheet pieces 120T are arranged in such a manner that the casting directions are parallel to the direction of the magnetic flux in the magnetic sheet 110. Here, the casting direction and the direction of anisotropy are the same direction.

When the plurality of magnetic sheet pieces 120T are arranged in such a manner that the casting directions are radially arranged, the Q2 value of the magnetic sheet 110 increases from the center to the outer periphery of the coil 200. That is, the effect of electromagnetic shielding by the nanocrystalline alloy ribbons constituting the magnetic sheet 110 is easily exhibited, and deterioration in electromagnetic shielding characteristics of the magnetic sheet 110 is easily suppressed even for the circling coil 200.

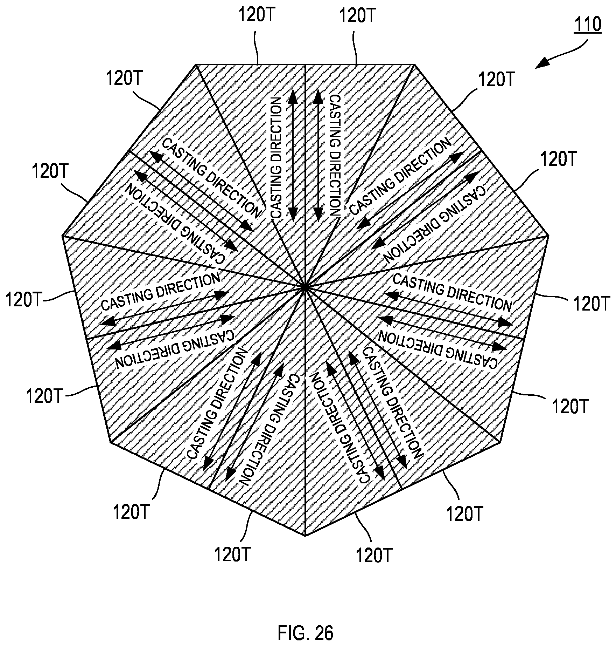

Next, evaluation of characteristics of the magnetic sheet 110 having the above configuration will be described with reference to FIGS. 26 to 34. The evaluation has been performed using Examples 1 to 4 and Comparative Example 1.

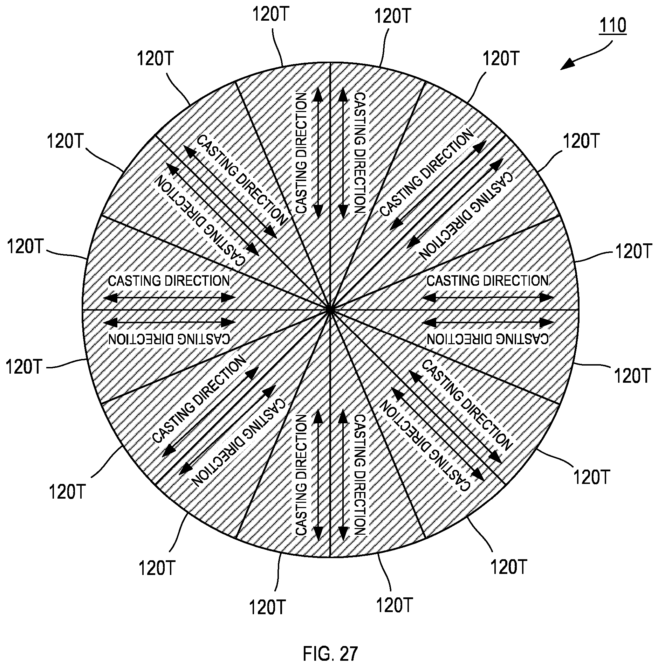

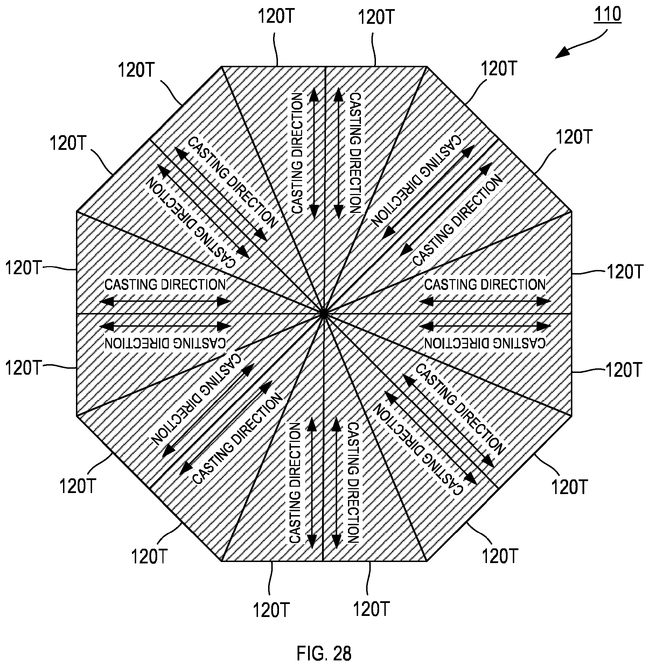

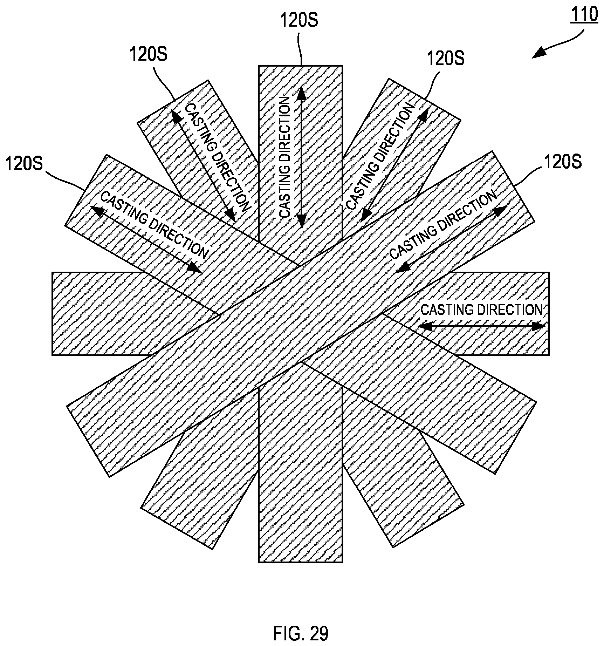

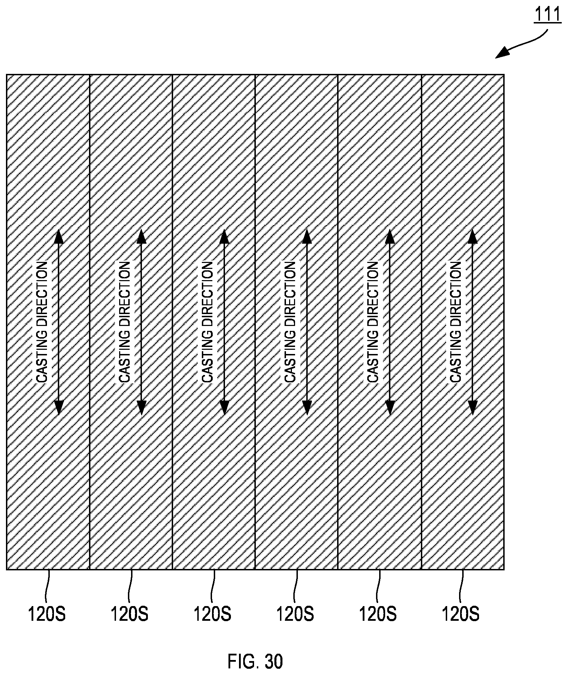

FIG. 26 is a view illustrating a configuration of a magnetic sheet 110 according to Example 1. FIG. 27 is a view illustrating a configuration of a magnetic sheet 110 according to Example 2. FIG. 28 is a view illustrating a configuration of a magnetic sheet 110 according to Example 3. FIG. 29 is a view illustrating a configuration of a magnetic sheet 110 according to Example 4. FIG. 30 is a view illustrating a configuration of a magnetic sheet 111 according to Comparative Example 1.

As illustrated in FIG. 26, the magnetic sheet 110 of Example 1 is a sheet formed by radially arranging 14 triangular magnetic sheet pieces 120T. The magnetic sheet 110 of Example 1 has a heptagonal shape. The magnetic sheet 110 of Example 1 has a heptagonal shape inscribed in a circle having a diameter of 60 mm.

As illustrated in FIG. 27, the magnetic sheet 110 of Example 2 is a sheet formed by radially arranging 16 fan-shaped magnetic sheet pieces 120T. The magnetic sheet 110 of Example 2 has a circular shape having a diameter of 60 mm.

As illustrated in FIG. 28, the magnetic sheet 110 of Example 3 is a sheet formed by radially arranging 16 triangular magnetic sheet pieces 120T. The magnetic sheet 110 of Example 3 has an octagonal shape. The magnetic sheet 110 of Example 3 has an octagonal shape inscribed in a circle having a diameter of 60 mm.

As illustrated in FIG. 29, the magnetic sheet 110 of Example 4 is a sheet formed by radially arranging 6 strip-shaped magnetic sheet pieces 120S. The length in the longitudinal direction of the magnetic sheet piece 120S constituting the magnetic sheet 110 of Example 4 is 60 mm, and the length in the width direction is 10 mm.

As illustrated in FIG. 30, the magnetic sheet 111 of Comparative Example 1 is a sheet formed by parallelly arranging 6 strip-shaped magnetic sheet pieces 120S. The length in the longitudinal direction of the magnetic sheet piece 120S constituting the magnetic sheet 111 of Comparative Example 1 is 60 mm, and the length in the width direction is 10 mm.

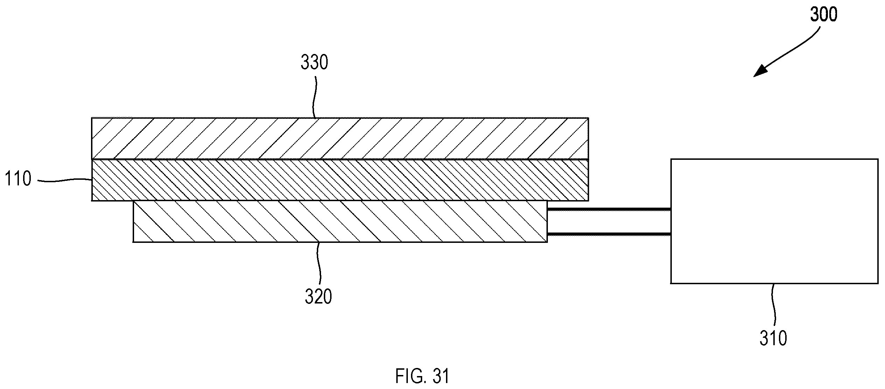

Next, a measurement apparatus 300 used for evaluation will be described with reference to FIG. 31. FIG. 31 is a view illustrating the measurement apparatus 300 used for evaluating the magnetic sheets.

The measurement apparatus 300 is provided with an LCR meter 310, a measurement coil 320, and an aluminum board 330. The LCR meter 310 is a device that is connected to the measurement coil 320 and measures Ls (inductance (H)) and Rs (resistance (Ω)) in the magnetic sheet 110 together with the measurement coil 320. As the LCR meter 310, E4980A manufactured by Keysight Technology was used.

The measurement coil 320 is a coil that sandwiches and disposes the magnetic sheet 110 in cooperation with the aluminum board 330. The diameter of the measurement coil is 50 mm. Ls of the measurement coil 320 at a frequency of 85 kHz is 3.5 μH, and Rs is 28 mΩ.

The aluminum board 330 is a plate member formed in a rectangular shape. Specifically, it is a plate-shaped member having a square shape with one side of 60 mm and a thickness of 2 mm.

Further, Q1 is calculated on the basis of Ls and Rs measured by the measurement apparatus 300. For the calculation, a calculation formula of $Q1 = Ls/Rs \times 2\pi f$ is used. Here, f represents a frequency (Hz).

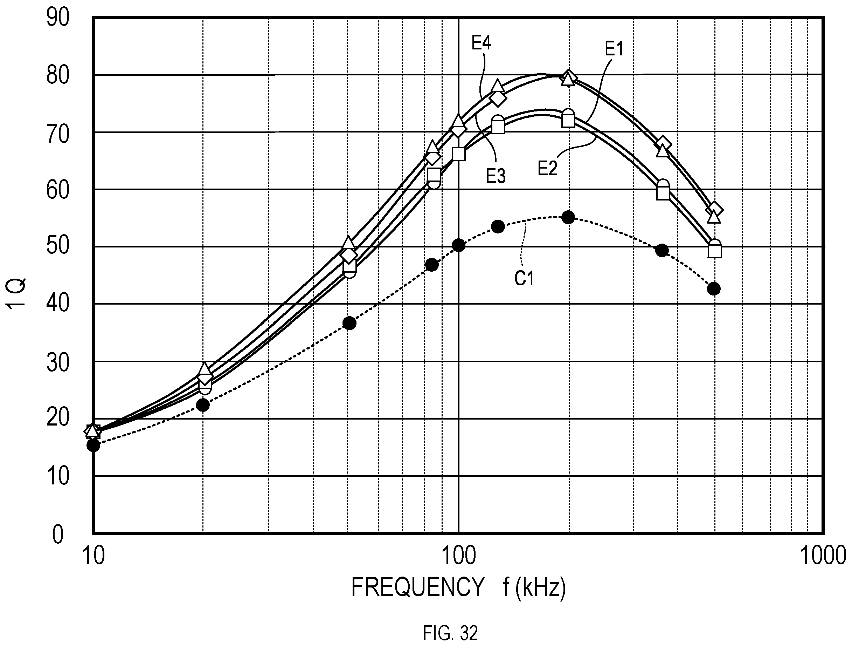

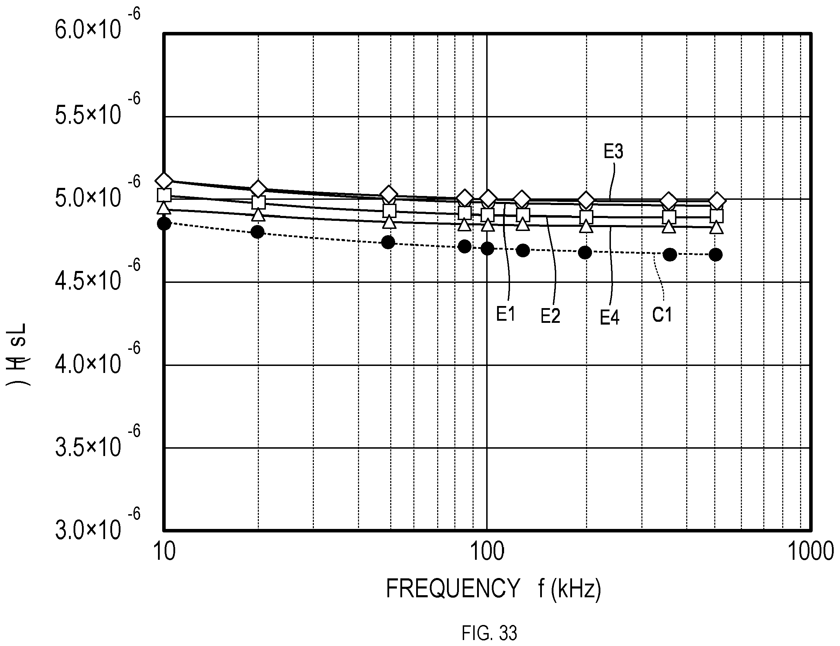

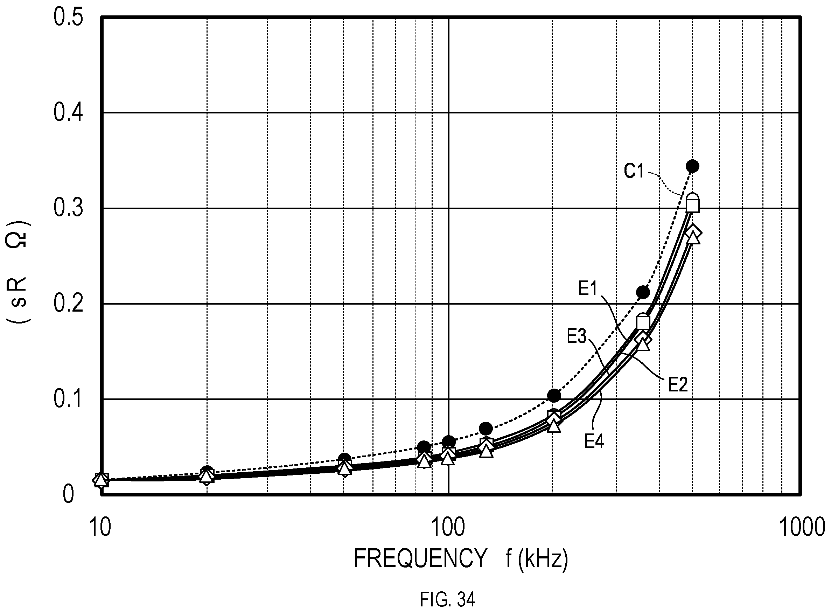

Next, a measurement result by the measurement apparatus 300 will be described with reference to FIGS. 32 to 34. FIG. 32 is a graph showing a value of Q1 calculated on the basis of a measurement result. FIG. 33 is a graph showing a measured value of Ls. FIG. 34 is a graph showing a measured value of Rs.

In FIGS. 32 to 34, a graph E1 indicated by an open circle in the drawing is a graph showing a calculation result of the magnetic sheet 110 of Example 1. A graph E2 indicated by an open square is a graph showing a calculation result of the magnetic sheet 110 of Example 2. A graph E3 indicated by an open diamond shape is a graph showing a calculation result of the magnetic sheet 110 of Example 3. A graph E4 indicated by an open triangle in the drawing is a graph showing a calculation result of the magnetic sheet 110 of Example 4. A graph C1 indicated by a black circle is a graph showing a calculation result of the magnetic sheet 111 of Comparative Example 1.

In FIG. 32, the horizontal axis represents the frequency (kHz) used for measurement, and the vertical axis represents the value of Q1. In FIG. 33, the horizontal axis represents the frequency (kHz) used for measurement, and the vertical axis represents the value of Ls (H). In FIG. 34, the horizontal axis represents the frequency (kHz) used for measurement, and the vertical axis represents the value of Rs (Ω).

As shown in FIG. 32, the value of Q1 generally peaks around 110 kHz, and decreases as the frequency deviates from 110 kHz. The graph E1 of the magnetic sheet 110 of Example 1, the graph E2 of the magnetic sheet 110 of Example 2, the graph E3 of the magnetic sheet 110 of Example 3, and the graph E4 of the magnetic sheet 110 of Example 4 are positioned above the graph C1 of the magnetic sheet 111 of Comparative Example 1 at all frequencies.

In other words, the magnetic sheet 110 of Example 1, the magnetic sheet 110 of Example 2, the magnetic sheet 110 of Example 3, and the magnetic sheet 110 of Example 4 have a larger value of Q1 than that of the magnetic sheet 111 of Comparative Example 1 at all frequencies.

In addition, as compared with the magnetic sheet 110 of Example 1 and the magnetic sheet 110 of Example 2, the magnetic sheet 110 of Example 3 and the magnetic sheet 110 of Example 4 have a larger value of Q1 at all frequencies.

In the magnetic sheet 110 of Example 1, the value of Q1 is smaller than that of the magnetic sheet 110 of Example 2 in a region where the frequency is lower than about 100 kHz, and the value of Q is larger than that of the magnetic sheet 110 of Example 2 in a region where the frequency is higher than about 100 kHz. In the magnetic sheet 110 of Example 3, the value of Q1 is smaller than that of the magnetic sheet 110 of Example 4 in a region where the frequency is lower than about 110 kHz, and the value of Q is larger than that of the magnetic sheet 110 of Example 4 in a region where the frequency is higher than about 110 kHz.

Note that an operation frequency used in a non-contact charging circuit for an automobile is about 85 kHz, and an operation frequency used in a non-contact charging circuit for a smartphone is about 128 kHz or 360 kHz. That is, it is shown that the magnetic sheet 110 of Example 1, the magnetic sheet 110 of Example 2, the magnetic sheet 110 of Example 3, and the magnetic sheet 110 of Example 4 have a high value of Q1 at the operation frequency used in the non-contact charging circuit for an automobile or the non-contact charging circuit of a smartphone.

As shown in FIG. 33, the value of Ls decreases as the frequency increases as a whole. In a region where the frequency is low, a decrease width of the value of Ls with an increase in the frequency is larger than that in a region where the frequency is high.

The graph E1 of the magnetic sheet 110 of Example 1, the graph E2 of the magnetic sheet 110 of Example 2, the graph E3 of the magnetic sheet 110 of Example 3, and the graph E4 of the magnetic sheet 110 of Example 4 are positioned above the graph C1 of the magnetic sheet 111 of Comparative Example 1 at all frequencies. In other words, the magnetic sheet 110 of Example 1, the magnetic sheet 110 of Example 2, the magnetic sheet 110 of Example 3, and the magnetic sheet 110 of Example 4 have a larger value of Ls than that of the magnetic sheet 111 of Comparative Example 1 at all frequencies.

The magnetic sheet 110 of Example 3 has the largest value of Ls. The magnetic sheet 110 of Example 1 has the second largest value of Ls. The magnetic sheet 110 of Example 2 has the third largest value of Ls. The magnetic sheet 110 of Example 4 has the fourth largest value of Ls.

As shown in FIG. 34, the value of Rs increases as the frequency increases as a whole. In a region where the frequency is high, an increase width of the value of Rs with an increase in the frequency is larger than that in a region where the frequency is low.

The graph E1 of the magnetic sheet 110 of Example 1, the graph E2 of the magnetic sheet 110 of Example 2, the graph E3 of the magnetic sheet 110 of Example 3, and the graph E4 of the magnetic sheet 110 of Example 4 are positioned below the graph C1 of the magnetic sheet 111 of Comparative Example 1 at all frequencies. In other words, the magnetic sheet 110 of Example 1, the magnetic sheet 110 of Example 2, the magnetic sheet 110 of Example 3, and the magnetic sheet 110 of Example 4 have a smaller value of Rs than that of the magnetic sheet 111 of Comparative Example 1 at all frequencies.

The magnetic sheet 110 of Example 4 has the smallest value of Rs. The magnetic sheet 110 of Example 3 has the second smallest value of Rs. The magnetic sheet 110 of Example 2 has the third smallest value of Rs. The magnetic sheet 110 of Example 1 has the fourth smallest value of Rs.

According to the magnetic sheet 110 having the above configuration, it is easy to make the direction of a magnetic flux of the magnetic sheet 110 generated by a current flowing through the circling coil 200 used in combination with the magnetic sheet 110 coincide with the direction of anisotropy of the magnetic sheet 110. Specifically, the direction of anisotropy in the magnetic sheet piece 120T, in other words, the direction in which the direct-current relative permeability $\mu$r is low, that is, the direction in which the magnetic characteristics are good, such as the direction in which the Q2 value is high, and the direction of the magnetic flux of the magnetic sheet 110 generated by the current flowing through the circling coil 200 are easily made to coincide with each other. Thus, even when the magnetic sheet is used for the circling coil 200, it is easy to suppress deterioration of the magnetic shielding characteristics of the magnetic sheet 110. In addition, it is easy to improve the characteristics of the coil 200.

At this time, the direction of anisotropy can be handled as the direction of anisotropy of the magnetic ribbon 20 constituting the magnetic sheet 110. When a nanocrystalline alloy ribbon is used as the magnetic ribbon 20, this is the direction of anisotropy of the nanocrystalline alloy ribbon.

In the direction of anisotropy, the value of the direct-current relative permeability $\mu$r is different between the first direction and the second direction orthogonal thereto in the plane direction of the magnetic ribbon 20, and a direction in which the value of the direct-current relative permeability $\mu$r is low, of the first direction and the second direction, is defined as the direction of anisotropy. For example, the casting direction can be evaluated as the first direction.

Here, the difference between the value of the direct-current relative permeability $\mu$ in the first direction and the value of the direct-current relative permeability $\mu$r in the second direction is preferably 3% or more in the following formula. The difference is more preferably 10% or more.

$$\text{(Larger } \mu\text{r value-smaller } \mu\text{r value)/larger } \mu\text{r value} \times 100 \ (\%)$$

When the shape of the magnetic sheet piece 120T is formed into a shape in which the dimension in the width direction increases from one end side toward the other end side, such as a triangular shape, the change in the dimension in the laminating direction of the magnetic sheet 110 is easily suppressed. That is, one end side having a relatively small dimension in the width direction is disposed at the center, and the other end side having a relatively large dimension in the width direction is disposed on the outer peripheral side. When the plurality of magnetic sheet pieces 120T are radially arranged, overlapping of the plurality of magnetic sheet pieces 120T at the radial center is easily suppressed. When the overlapping is suppressed, the dimension in the laminating direction of the magnetic sheet 110 at the radial center is less likely to increase, whereby the difference from the dimension in the laminating direction on the outer peripheral side is likely to decrease.

When the magnetic ribbons 20 are laminated with the adhesive layer 10 interposed therebetween, it is easy to laminate a plurality of magnetic ribbons 20. The adhesive layer 10 is disposed between the magnetic ribbons 20 that are laminated and adjacent to each other. The adhesive layer 10 can adhere to the magnetic ribbon 20 to hold the magnetic ribbon 20. When the magnetic ribbons 20 are laminated with the adhesive layer 10 interposed therebetween, the relative positions of the plurality of magnetic ribbons 20 are easily held and lamination is facilitated.

When the magnetic ribbon 20 is a nanocrystalline alloy ribbon, the magnetic ribbon 20 can be made a soft magnetic ribbon. In addition, a magnetic ribbon can be formed using an alloy. The nanocrystalline alloy ribbon is thin and easily obtains high characteristics as compared with other magnetic materials. Thus, it is advantageous to configure the magnetic sheet 110 with high characteristics and a small thickness.

When the magnetic ribbon 20 is a member produced by a single roll method, the magnetic ribbon 20 is easily formed into an elongated shape. In addition, the magnetic ribbon 20 in which the casting direction is the direction of anisotropy is easily formed.

When the magnetic sheet 110 is formed by laminating magnetic ribbons in multiple layers, characteristics as a magnetic shield in the magnetic sheet 110 are less likely to deteriorate. That is, when the magnetic ribbons 20 are laminated, the magnetic characteristics of the magnetic sheet 110 can be improved, and the magnetic sheet 110 having higher characteristics can be configured.

When the first adjacent position 151 and the second adjacent position 152 are different positions as viewed in the laminating direction, the magnetic sheet piece 120T in the second magnetic sheet 110 is disposed at the first adjacent position 151 as viewed in the laminating direction. In addition, the magnetic sheet piece 120T of the first magnetic sheet 110 is disposed at the second adjacent position 152. As a result, it is possible to suppress continuous formation of magnetic gaps in the laminating direction, and the characteristics of the magnetic sheet 110 as a magnetic shield are less likely to deteriorate.

Note that the technical scope of the present disclosure is not limited to the above embodiments, and various modifications can be made without departing from the gist of the present disclosure. For example, the present disclosure is not limited to be applied to the embodiments described above, but may be applied to an embodiment in which these embodiments are appropriately combined, and is not particularly limited.

**Claims**

1. A sheet-shaped magnetic member, comprising a plurality of magnetic sheet pieces each formed in an elongated shape and having anisotropy in which magnetic characteristics in a longitudinal direction and magnetic characteristics in a width direction intersecting with the longitudinal direction are different, wherein
the plurality of magnetic sheet pieces are radially arranged.

2. The sheet-shaped magnetic member according to claim 1, wherein

   the magnetic sheet pieces each have a shape in which a dimension in a width direction increases from one end side to the other end side in the longitudinal direction, and
   the plurality of magnetic sheet pieces are radially arranged with the one end side facing a center side and the other end side facing an outer peripheral side.

3. The sheet-shaped magnetic member according to claim 1, wherein

   the magnetic sheet pieces each include a plurality of magnetic ribbons and a plurality of adhesive layers, and
   the magnetic ribbons are laminated in multiple layers with the adhesive layers interposed therebetween.

4. The sheet-shaped magnetic member according to claim 3, wherein the magnetic ribbons each are a nanocrystalline alloy ribbon.

5. The sheet-shaped magnetic member according to claim 3 or 4, wherein

   the magnetic ribbons each are a member produced by a single roll method in which a molten metal is discharged onto a cooling roll that rotates and quenched to be solidified, and
   when a direction along a rotation direction of the cooling roll of each of the magnetic ribbons is a casting direction, a direction from one end side to the other end side is a direction along the casting direction.

6. The sheet-shaped magnetic member according to claim 1, being formed by laminating magnetic sheets in which the plurality of magnetic sheet pieces are radially arranged in multiple layers.

7. The sheet-shaped magnetic member according to claim 1, comprising:

   a first magnetic sheet in which the plurality of magnetic sheet pieces are radially arranged; and
   a second magnetic sheet in which the plurality of magnetic sheet pieces are radially arranged and laminated adjacent to the first magnetic sheet, wherein
   a first adjacent position where the plurality of magnetic sheet pieces in the first magnetic sheet are adjacent to each other and a second adjacent position where the plurality of magnetic sheet pieces in the second magnetic sheet are adjacent to each other are different positions as viewed in a laminating direction.

8. A sheet-shaped magnetic member, being formed by arranging a plurality of magnetic ribbons, the sheet-shaped magnetic member having an area larger than an area of each of the magnetic ribbons, wherein

   the magnetic ribbons each have different values of a direct-current relative permeability $\mu_r$ in a first direction and in a second direction orthogonal to the first direction in a planar direction, and of the first direction and the second direction, a direction in which the value of the direct-current relative permeability $\mu_r$ is low is defined as a direction of anisotropy, and
   when the sheet-shaped magnetic member is disposed near a coil formed in a circling shape, a magnetic flux is generated in the sheet-shaped magnetic member in relation to a current flowing through the coil, and each of the magnetic ribbons is disposed in such a manner that an angle formed between a direction of the magnetic flux and the direction of anisotropy are within 60°.

9. The sheet-shaped magnetic member according to claim 8, wherein the magnetic ribbons are stacked in multiple layers.

10. The sheet-shaped magnetic member according to claim 8 or 9, wherein the magnetic ribbons each are a nanocrystalline alloy ribbon, and the direction of anisotropy is a casting direction of the nanocrystalline alloy ribbon.

11. A sheet-shaped magnetic member, being formed by arranging a plurality of magnetic ribbons, the sheet-shaped magnetic member having an area larger than an area of each of the magnetic ribbons, wherein

    the magnetic ribbons each have different values of a direct-current relative permeability $\mu_r$ in a first direction and in a second direction orthogonal to the first direction in a planar direction, and of the first direction and the second direction, a direction in which the value of the direct-current relative permeability $\mu_r$ is low is defined as a direction of anisotropy,
    the sheet-shaped magnetic member is disposed near a coil formed in a circling shape,
    each of the magnetic ribbons is disposed to face the coil, and
    in each of the magnetic ribbons, a direction of anisotropy of the magnetic ribbon intersects with a direction of a current of the coil in a portion facing the magnetic ribbon, and an angle of the intersecting is 30° or more.

12. The sheet-shaped magnetic member according to claim 11, wherein the magnetic ribbons are stacked in multiple layers.

13. The sheet-shaped magnetic member according to claim 11 or 12, wherein the magnetic ribbons each are a nanocrystalline alloy ribbon, and the direction of anisotropy is a casting direction of the nanocrystalline alloy ribbon.

14. A sheet-shaped magnetic member, being formed by arranging a plurality of magnetic ribbons, the sheet-shaped magnetic member having an area larger than an area of each of the magnetic ribbons, wherein

    the magnetic ribbons each have different values of a direct-current relative permeability $\mu_r$ in a first direction and in a second direction orthogonal to the first direction in a planar direction, and of the first direction and the second direction, a direction in which the value of the direct-current relative permeability $\mu_r$ is low is defined as a direction of anisotropy,
    the sheet-shaped magnetic member is disposed near a coil formed in a circling shape, each of the magnetic ribbons is disposed to face the coil, and
    in each of the magnetic ribbons, an angle formed between a direction of anisotropy of the magnetic ribbon and a normal line of the coil in a portion facing the magnetic ribbon is 60° or less.

15. The sheet-shaped magnetic member according to claim 14, wherein the magnetic ribbons are stacked in multiple layers.

16. The sheet-shaped magnetic member according to claim 14 or 15, wherein the magnetic ribbons each are a nanocrystalline alloy ribbon, and the direction of anisotropy is a casting direction of the nanocrystalline alloy ribbon.

FIG. 1

FIG. 2A

FIG. 2B

EP 4 564 379 A1

FIG. 3A

FIG. 3B

FIG. 4

FIG. 5

EP 4 564 379 A1

FIG. 6

FIG. 7C

FIG. 7B

FIG. 7A

FIG. 8A

FIG. 8B

FIG. 8C

FIG. 9A          FIG. 9B          FIG. 9C

FIG. 10B

FIG. 10A

FIG. 11

FIG. 12

FIG. 13

FIG. 14

FIG. 15

FIG. 16

EP 4 564 379 A1

FIG. 17

FIG. 18

FIG. 19

EP 4 564 379 A1

FIG. 20

FIG. 21

20

C                                                    C

FIG. 22

FIG. 23

FIG. 24

FIG. 25

EP 4 564 379 A1

FIG. 26

FIG. 27

FIG. 28

FIG. 29

FIG. 30

FIG. 31

FIG. 32

FIG. 33

EP 4 564 379 A1

FIG. 34

EP 4 564 379 A1

FIG. 35

FIG. 36

## INTERNATIONAL SEARCH REPORT

| International application No. |
|---|
| **PCT/JP2023/027814** |

| A. | CLASSIFICATION OF SUBJECT MATTER |
|---|---|

**H01F 1/16**(2006.01)i; **H01F 1/153**(2006.01)i; **H01F 3/04**(2006.01)i; **H01F 27/25**(2006.01)i
FI:  H01F1/16; H01F1/153 133; H01F3/04; H01F27/25

According to International Patent Classification (IPC) or to both national classification and IPC

| B. | FIELDS SEARCHED |
|---|---|

Minimum documentation searched (classification system followed by classification symbols)

C21D6/00; C22C5/00-25/00; C22C27/00-28/00; C22C30/00; C22C35/00-45/00; H01F1/12; H01F3/00; H01F27/33-27/42; H01F38/14; H01F41/10; H02J50/00; H05K9/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2018/0286575 A1 (SAMSUNG ELECTRO-MECHANICS CO., LTD.) 04 October 2018 (2018-10-04) <br> paragraphs [0007]-[0094], fig. 1-11 | 1-4, 6, 8, 9, 11, 12, 14, 15 |
| Y | paragraphs [0007]-[0094], fig. 1-11 | 5, 10, 13, 16 |
| A | paragraphs [0007]-[0094], fig. 1-11 | 7 |
| Y | JP 2022-058246 A (AICHI STEEL WORKS LTD.) 11 April 2022 (2022-04-11) <br> paragraphs [0018]-[0072], fig. 1-5 | 5, 10, 13, 16 |
| Y | JP 2021-105212 A (HITACHI METALS LTD.) 26 July 2021 (2021-07-26) <br> paragraph [0047] | 5, 10, 13, 16 |
| A | WO 2012/147341 A1 (KK TOSHIBA) 01 November 2012 (2012-11-01) <br> entire text, all drawings | 1-16 |
| A | US 2021/0249166 A1 (LG INNOTEK CO., LTD.) 12 August 2021 (2021-08-12) <br> entire text, all drawings | 1-16 |

| ✔ Further documents are listed in the continuation of Box C. | ✔ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **12 September 2023** | **19 September 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**

| International application No. |
|---|
| **PCT/JP2023/027814** |

**C.  DOCUMENTS CONSIDERED TO BE RELEVANT**

| Category* | Citation of document, with indication, where appropriate, of the relevant passages | Relevant to claim No. |
|---|---|---|
| A | CN 212461358 U (XINWEI COMMUNICATION (JIANGSU) CO., LTD.) 02 February 2021 (2021-02-02)<br>entire text, all drawings | 1-16 |

Form PCT/ISA/210 (second sheet) (January 2015)

## INTERNATIONAL SEARCH REPORT
### Information on patent family members

International application No.

**PCT/JP2023/027814**

| Patent document cited in search report | | | Publication date (day/month/year) | Patent family member(s) | | | Publication date (day/month/year) |
|---|---|---|---|---|---|---|---|
| US | 2018/0286575 | A1 | 04 October 2018 | KR 10-2018-0112354 A paragraphs [0007]-[0061], fig. 1-11 | | | |
| | | | | CN | 108695986 | A | |
| | | | | CN | 208190354 | U | |
| JP | 2022-058246 | A | 11 April 2022 | (Family: none) | | | |
| JP | 2021-105212 | A | 26 July 2021 | US 2021/0202144 A1 paragraphs [0117], [0118] | | | |
| | | | | EP | 3842555 | A1 | |
| | | | | CN | 113053611 | A | |
| | | | | KR 10-2021-0083203 | | A | |
| WO | 2012/147341 | A1 | 01 November 2012 | US 2014/0049212 A1 entire text, all drawings | | | |
| | | | | US | 2019/0027285 | A1 | |
| | | | | CN | 103493158 | A | |
| | | | | KR 10-2014-0003636 | | A | |
| US | 2021/0249166 | A1 | 12 August 2021 | WO 2019/231142 A1 entire text, all drawings | | | |
| | | | | CN | 112219248 | A | |
| | | | | KR | 10-2022431 | B1 | |
| CN | 212461358 | U | 02 February 2021 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022121759 A
- JP 2008112830 A
- JP 2019522355 A